(19) Europäisches Patentamt / European Patent Office / Office européen des brevets

(11) **EP 4 545 239 A1**

(12) **EUROPEAN PATENT APPLICATION**
published in accordance with Art. 153(4) EPC

(43) Date of publication:
**30.04.2025  Bulletin 2025/18**

(21) Application number: **23856894.3**

(22) Date of filing: **13.04.2023**

(51) International Patent Classification (IPC):
*B23K 20/12* (2006.01)      *B21B 15/00* (2006.01)
*C22C 38/00* (2006.01)      *C22C 38/60* (2006.01)

(52) Cooperative Patent Classification (CPC):
**B21B 15/00; B23K 20/12; C22C 38/00; C22C 38/60**

(86) International application number:
**PCT/JP2023/015082**

(87) International publication number:
**WO 2024/042774 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **23.08.2022   JP 2022132853**

(71) Applicant: **JFE Steel Corporation
Tokyo 100-0011 (JP)**

(72) Inventors:
• **MATSUSHITA, Muneo
  Tokyo 100-0011 (JP)**
• **IWATA, Shohei
  Tokyo 100-0011 (JP)**
• **TOMITA, Kai
  Tokyo 100-0011 (JP)**

(74) Representative: **Hoffmann Eitle
Patent- und Rechtsanwälte PartmbB
Arabellastraße 30
81925 München (DE)**

(54) **FRICTION STIR JOINING METHOD FOR ELECTROMAGNETIC STEEL STRIP, METHOD FOR MANUFACTURING ELECTROMAGNETIC STEEL STRIP, FRICTION STIR JOINING DEVICE, AND DEVICE FOR MANUFACTURING ELECTROMAGNETIC STEEL STRIP**

(57)   An electrical steel strip friction stir welding method is provided that is able to inhibit the occurrence of coil joint fracture on a production line caused by degradation of mechanical properties and shape of the coil joint, under high work efficiency conditions. Double-sided friction stir welding with post-cooling is carried out under conditions that simultaneously satisfy the relationships of Expressions (1) and (2).

FIG. 1A

**Description**

TECHNICAL FIELD

The present disclosure relates to an electrical steel strip friction stir welding method, a method of producing an electrical steel strip, a friction stir welding device, and an electrical steel strip production device.

BACKGROUND

In steel sheet production lines, such as pickling, cold rolling, annealing, and coating or plating production lines, in order to improve productivity and increase yield, performing so-called coil joining then passing a steel strip through the production line is common. Here, coil joining refers to the joining of an end (trailing end) of a preceding steel strip and an end (leading end) of the steel strip following the preceding steel strip (hereinafter also referred to as trailing steel strip) in a production line. Hereinafter, a joined portion formed by coil joining is also referred to as a coil joint. The leading end is the end of the steel strip in the direction of travel on the production line. Further, the trailing end is the end of the steel strip in the direction opposite the direction of travel on the production line. Coil joining enables rolling and the like with tension applied to the entire length of the steel strip. Further, coil joining enables highly precise control of strip thickness and shape even at the leading and trailing ends of the steel strip.

In coil joining, conventionally, flash butt welding and the like are commonly applied. However, with advances in laser welders, laser welding is becoming a mainstream application for coil joining in, for example, production lines for electrical steel sheets, stainless steel sheets, and high tensile strength steel sheets.

As examples of such technology, Patent Literature (PTL) 1 describes:
"A high-Si steel laser welding method comprising, when welding high-Si steel, welding using a filler wire containing Ni as the main component or supplying powder filler containing Ni as the main component, so that the chemical composition of weld metal satisfies the following Expression (1).

$$X = [\%Ni] - [\%Si] \times 2.5 - ([\%Cr] + [\%Mo]) \times 0.4 \geq 0 \qquad \ldots(1)$$

Here, $[\%Ni]$, $[\%Si]$, $[\%Cr]$, and $[\%Mo]$ represent content (wt%) of Ni, Si, Cr, and Mo in the weld metal, respectively."

PTL 2 describes:

"In a laser welding method for butt welding a leading sheet and a trailing sheet using a filler wire, a ratio (Gap/DEPO) of the butt gap (Gap) between the leading sheet and the trailing sheet at an initial stage of welding to an average width of the weld metal (DEPO) is 0.3 to 0.8."

PTL 3 describes:

"In a welded portion formed by laser welding a leading sheet and a trailing sheet made of special steel that are conveyed on a continuous cold rolling line,
when L1 is the minimum thickness of base metal existing below an upper extension portion consisting of weld metal that extends to the upper side of the base metal due to cold rolling, and L2 is the minimum thickness of the base metal between the upper extension portion and a lower extension portion consisting of weld metal that extends to the lower side of the base metal due to cold rolling, then at least one of L1 or L2 is greater than zero."

CITATION LIST

Patent Literature

PTL 1: JP H05-305466 A
PTL 2: JP 2004-025284 A
PTL 3: JP 2011-140026 A
PTL 4: JP H07-505090 A (publication in Japan of WO 9310935 A1)
PTL 5: JP 3261433 B2

PTL 6: JP 4838385 B2
PTL 7: JP 4838388 B2
PTL 8: JP WO 2019/26864 A1
PTL 9: JP WO 2019/54400 A1
PTL 10: JP 6332561 B2
PTL 11: JP 6332562 B2
PTL 12: JP 6497451 B2
PTL 13: JP 2020-124739 A

Non-Patent Literature

NPL 1: Cui, L.; Fujii, H.; Tsuji, N.; Nogi, K. Scripta Mater. 2007, 56, p.637-640.

SUMMARY

(Technical Problem)

Laser welding is fusion welding, and therefore causes embrittlement due to impurity segregation during fusion and solidification, and due to hydrogen entry. As a result, degradation of mechanical properties of the joined portion (welded portion) may occur. In particular, electrical steel sheet chemical composition contains a large amount of Si, and therefore mechanical properties of coil joints tend to degrade significantly. Therefore, when laser welding as in PTL 1 to PTL 3 is applied as coil joining of electrical steel strips, there is a problem in that a fracture may occur at a coil joint, resulting in a drop in productivity due to line stoppage and the like on a production line such as a continuous cold rolling line.

In view of the circumstances described above, it would be helpful to provide an electrical steel strip friction stir welding method that is able to very effectively inhibit the occurrence of coil joint fracture on a production line caused by degradation of mechanical properties and shape of the coil joint while maintaining high work efficiency, and is further advantageous in terms of durability of the rotating tools.

Further, it would be helpful to provide a method of producing an electrical steel strip using the electrical steel strip friction stir welding method.

Further, it would be helpful to provide a friction stir welding device that can be suitably used for the electrical steel strip friction stir welding method.

Further, it would be helpful to provide an electrical steel strip production device that includes the friction stir welding device.

(Solution to Problem)

The inventors conducted extensive studies to solve the technical problem outlined above. First, the inventors investigated and examined the reasons for the degradation of mechanical properties and shape of coil joints when laser welding is applied as coil joining of electrical steel strips, and made the following discoveries.

(a) As mentioned above, electrical steel sheet chemical composition contains a large amount of Si, for example, specifically 2.0 mass% to 5.0 mass%. Si is a ferrite-stabilizing element. Therefore, when typical laser welding is applied to coil joining of electrical steel strips, ferrite crystal grains in the coil joint, which is a fusion zone, and also ferrite crystal grains in a heat-affected zone, become coarse. This greatly degrades mechanical properties of the coil joint, especially toughness and bending strength, and leads to the occurrence of coil joint fracture in the production line.

(b) Further, the technologies in PTL 1 to 3 use a filler mainly composed of Ni, an austenite-stabilizing element. Therefore, at the coil joints, mainly austenite phase is obtained. However, according to the technologies described in PTL 1 to 3, it is necessary to properly control balance between the Ni equivalent and the Cr equivalent in the fusion zone (weld metal) at all times by eliminating variation of the butt gap between the preceding steel strip and the trailing steel strip and by extremely strictly controlling an amount of fusion of the filler and the steel sheet at the fusion zone (weld metal). In other words, when the balance between the Ni equivalent and the Cr equivalent in the fusion zone (weld metal) is not properly controlled, a martensitic phase that is a hard and brittle microstructure forms in the coil joint. This greatly degrades mechanical properties of the coil joint, especially toughness. Further, in the heat-affected zone, mechanical properties of the coil joint degrade greatly due to the coarsening of ferrite crystal grains. These reasons lead to the occurrence of coil joint fracture in a production line.

(c) Further, the above-mentioned variation in the butt gap between the preceding steel strip and the trailing steel strip affects weld reinforcement height. For example, when weld reinforcement height is high and a welded portion is excessively convex, stresses will be concentrated at the weld toe portions when the weld is under load. Therefore, the above-mentioned variation in the butt gap between the preceding steel strip and the trailing steel strip is also a cause of coil joint fracture occurrence in a production line. Excess weld may be removed by grinding or other means. However, such an increase in processing leads to a significant decrease in productivity.

Based on the above discoveries, the inventors further conducted various investigations and arrived at the idea of applying friction stir welding as electrical steel strip coil joining.

Here, friction stir welding is solid phase joining that utilizes frictional heat between a rotating tool and material to be joined and plastic flow of the material to be joined. In other words, a rotating tool is used to friction stir an unjoined portion (region to be joined) of the material to be joined. When the unjoined portion of the material to be joined is heated by frictional heat, plastic flow begins. An interface between a plastic flow zone and a base metal portion is then greatly elongated. As a result, clean interfaces without oxides come into contact with each other, and a joined portion is formed without fusion of the material to be joined. Here, a joined portion is a region that undergoes hot working due to frictional heat between the rotating tool and the material to be joined and plastic flow to form a recrystallized microstructure, and is sometimes referred to as a stir zone. Further, a region adjacent to the joined portion is affected by hot working due to frictional heat and plastic flow, but the region is formed having a microstructure without recrystallization, due to insufficient temperature and working. This region is called a thermo-mechanically affected zone. Further, a region also exists in the material to be joined that is not affected by hot working due to frictional heat and plastic flow. This region is called a base metal portion. Technology related to friction stir welding is described in, for example, PTL 4 to PTL 13 and NPL 1, but none of these are applicable to electrical steel strip coil joining.

Based on the above ideas, the inventors conducted further studies and came to the following discoveries.
(d) To advantageously solve the problems (a) to (c), the following points are important.

•    So-called double-sided friction stir welding is applied as a joining method.
•    Further, the diameter D (mm) of the shoulders of the rotating tools satisfies the relationship of the following Expression (1).
•    Further, joining conditions are appropriately controlled. In particular, the rotation speed RS (r/min) of the rotating tools, the diameter D (mm) of the shoulders of the rotating tools, and the joining speed JS (mm/min), expressed as RS $\times$ $D^3$/JS, satisfy the relationship of the following Expression (2).

As a result, even when electrical steel strips are used as the material to be joined, mechanical properties of the coil joint are improved without causing degradation of the shape of the coil joint, and the occurrence of coil joint fractures in a production line is very effectively inhibited. Further, joining speed may be increased while inhibiting the occurrence of defects, and this provides excellent work efficiency and is very advantageous in terms of productivity. Further this is advantageous in terms of durability of the rotating tools. Hereinafter, double-sided friction stir welding in which the joined portion is cooled by a cooling device after the joining process is also referred to as double-sided friction stir welding with post-cooling.

$$4 \times TJ \leq D \leq 10 \times TJ \qquad \ldots(1)$$

$$200 \times TJ \leq RS \times D^3/JS \leq 2000 \times TJ \qquad \ldots(2)$$

Here, TJ is defined such that,

when the unjoined portion is the butted portion, TJ is an average value (mm) of the thickness of the first electrical steel strip and the thickness of the second electrical steel strip, and
when the unjoined portion is the overlapped portion, TJ is the thickness (mm) of the overlapped portion.

(e) Further, in addition to satisfying both of the relationships of Expressions (1) and (2), the steel microstructures of the joined portion and thermo-mechanically affected zone are preferably made to be mainly ferrite phase, and both refinement of the steel microstructures of the joined portion and thermo-mechanically affected zone and reduction of a hardness difference between the joined portion and the base metal portion are preferred. Specifically, satisfying the relationships of the following Expressions (3) to (6) at the same time is preferred.

As a result, even when electrical steel strips are used as the material to be joined, mechanical properties of the coil joint are improved without causing degradation of the shape of the coil joint, and the occurrence of coil joint fractures in a production line is more effectively inhibited.

$$Dsz \leq 100 \ \mu m \qquad ...(3)$$

$$Dhaz1 \leq Dbm1 \qquad ...(4)$$

$$Dhaz2 \leq Dbm2 \qquad ...(5)$$

$$0.9 \times (Hbm1 + Hbm2)/2 \leq Hsz \leq 1.2 \times (Hbm1 + Hbm2)/2 \qquad ...(6)$$

Here,

Dsz is an average value in $\mu m$ of ferrite grain size of the joined portion,
Dhazl is an average value in $\mu m$ of ferrite grain size of the thermo-mechanically affected zone on a first electrical steel strip side,
Dhaz2 is an average value in $\mu m$ of ferrite grain size of the thermo-mechanically affected zone on a second electrical steel strip side,
Dbm1 is an average value in $\mu m$ of ferrite grain size of the base metal portion of the first electrical steel strip,
Dbm2 is an average value in $\mu m$ of ferrite grain size of the base metal portion of the second electrical steel strip,
Hsz is an average value of hardness of the joined portion,
Hbm1 is an average value of hardness of the base metal portion of the first electrical steel strip, and
Hbm2 is an average value of hardness of the base metal portion of the second electrical steel strip.

(f) Further, it is preferable to select conditions for joining that simultaneously satisfy the relationships of Expressions (3) to (6) and also satisfy the relationships of the following Expressions (7) and (8). As a result, even when electrical steel strips are used as the material to be joined, mechanical properties of the coil joint are improved without causing degradation of the shape of the coil joint, and the occurrence of coil joint fractures in a production line is more effectively inhibited.

$$0.8 \times TbmL \leq TszL \qquad ...(7)$$

$$TszH \leq 1.3 \times TbmH \qquad ...(8)$$

Here,

TszL is the minimum value in mm of the thickness of the joined portion,
TszH is the maximum value in mm of the thickness of the joined portion,
TbmL is the thickness in mm of the thinner of the first electrical steel strip and the second electrical steel strip, and
TbmH is the thickness in mm of the thicker of the first electrical steel strip and the second electrical steel strip.

When the thicknesses of the first electrical steel strip and the second electrical steel strip are the same, TbmL = TbmH.

(g) In addition, by applying double-sided friction stir welding as a joining method and satisfying both of the relationships of Expressions (1) and (2), the stirring function is further enhanced. Therefore, it becomes possible to use a rotating tool without a probe that has only a shoulder at the lead end of the rotating tool (hereinafter also referred to simply as a rotating tool without a probe). In other words, in a typical rotating tool (hereinafter also referred to as a rotating tool with a probe), a probe (pin) is disposed at the lead end, the probe protruding from the shoulder. As a result, the probe is subjected to greater stress than the shoulder and is prone to breakage and wear. Therefore, the use of a rotating tool without a probe is very advantageous in terms of durability and extended service life of the rotating tool, and thus in reducing joint failure rates (due to wear and breakage of the rotating tool). Here, a rotating tool without a probe is, for example, a rotating tool without a probe in which a lead end of the rotating tool (contact surface with the material to be joined) is a plane, a convex curved surface, or a concave curved surface.

(h) Further, for a rotating tool without a probe, a spiral-shaped stepped portion spiraling in the opposite direction to rotation is preferably provided on the lead end of the rotating tool. This promotes plastic flow to increase joining speed and further improve work efficiency.

The present disclosure is based on these discoveries and further studies.

Primary features of the present disclosure are as follows.

1. An electrical steel strip friction stir welding method for joining a first electrical steel strip and a second electrical steel strip as material to be joined by a pair of rotating tools facing each other, the electrical steel strip friction stir welding method comprising:

a joining process of pressing the rotating tools into an unjoined portion of the material to be joined from both sides while rotating the rotating tools in opposite directions, and moving the rotating tools in a joining direction, to join the first electrical steel strip and the second electrical steel strip to form a joined portion; and

a cooling process of cooling the joined portion by a cooling device disposed behind the rotating tools in the joining direction on at least one side of the material to be joined, wherein

the unjoined portion of the material to be joined is a butted portion or an overlapped portion of an end of the first electrical steel strip and an end of the second electrical steel strip following the first electrical steel strip,

the joining process and the cooling process are carried out continuously by moving the rotating tools in the joining direction in conjunction with the cooling device,

the diameter D in mm of shoulders of the rotating tools satisfies the relationship of the following Expression (1), and

a rotation speed RS in r/min of the rotating tools, the diameter D in mm of the shoulders of the rotating tools, and a joining speed JS in mm/min, expressed as RS $\times$ D$^3$/JS, satisfy the relationship of the following Expression (2),

$$4 \times TJ \leq D \leq 10 \times TJ \qquad \ldots(1)$$

$$200 \times TJ \leq RS \times D^3/JS \leq 2000 \times TJ \qquad \ldots(2)$$

where TJ is defined such that,

when the unjoined portion is the butted portion, TJ is an average value in mm of the thickness of the first electrical steel strip and the thickness of the second electrical steel strip, and

when the unjoined portion is the overlapped portion, TJ is the thickness in mm of the overlapped portion.

2. The electrical steel strip friction stir welding method according to 1, above, wherein, in the joining process, the joining is carried out under conditions that steel microstructures of the joined portion and a thermo-mechanically affected zone formed by the joining of the first electrical steel strip and the second electrical steel strip become mainly ferrite phase and the relationships of the following Expressions (3) to (6) are satisfied,

$$Dsz \leq 100 \ \mu m \qquad \ldots(3)$$

$$Dhaz1 \leq Dbm1 \qquad \ldots(4)$$

$$Dhaz2 \leq Dbm2 \qquad \ldots(5)$$

$$0.9 \times (Hbm1 + Hbm2)/2 \leq Hsz \leq 1.2 \times (Hbm1 + Hbm2)/2 \qquad \ldots(6)$$

where

Dsz is an average value in $\mu$m of ferrite grain size of the joined portion,

Dhazl is an average value in $\mu$m of ferrite grain size of the thermo-mechanically affected zone on a first electrical steel strip side,

Dhaz2 is an average value in $\mu$m of ferrite grain size of the thermo-mechanically affected zone on a second electrical steel strip side,

Dbm1 is an average value in $\mu$m of ferrite grain size of the base metal portion of the first electrical steel strip,

Dbm2 is an average value in $\mu$m of ferrite grain size of the base metal portion of the second electrical steel strip,

Hsz is an average value of hardness of the joined portion,

Hbm1 is an average value of hardness of the base metal portion of the first electrical steel strip, and

Hbm2 is an average value of hardness of the base metal portion of the second electrical steel strip.

3. The electrical steel strip friction stir welding method according to 1 or 2, above, wherein, in the joining process, the joining is carried out under conditions satisfying the relationships of the following Expressions (7) and (8),

$$0.8 \times TbmL \leq TszL \qquad \ldots(7)$$

$$TszH \leq 1.3 \times TbmH \qquad \ldots(8)$$

where

TszL is the minimum value in mm of the thickness of the joined portion,
TszH is the maximum value in mm of the thickness of the joined portion,
TbmL is the thickness in mm of the thinner of the first electrical steel strip and the second electrical steel strip,
TbmH is the thickness in mm of the thicker of the first electrical steel strip and the second electrical steel strip, and when the thicknesses of the first electrical steel strip and the second electrical steel strip are the same, TbmL = TbmH.

4. The electrical steel strip friction stir welding method according to any one of 1 to 3, above, wherein, in the joining process, a gap G in mm between the shoulders of the rotating tools satisfies the relationship of the following Expression (9),

$$0.4 \times TJ \leq G \leq 0.9 \times TJ \qquad \ldots(9).$$

5. The electrical steel strip friction stir welding method according to any one of 1 to 4, above, wherein the rotating tools are rotating tools without probes.
6. The electrical steel strip friction stir welding method according to 5, above, wherein the lead ends of the rotating tools are each a flat, convex curved, or concave curved surface.
7. The electrical steel strip friction stir welding method according to 5 or 6, above, wherein the lead ends of the rotating tools each have a spiral-shaped stepped portion spiraling in the opposite direction to rotation.
8. The electrical steel strip friction stir welding method according to 7, above, wherein each of the spiral-shaped stepped portions becomes gradually lower from the center to the periphery of the lead end of the rotating tool.
9. The electrical steel strip friction stir welding method according to 7, above, wherein each of the spiral-shaped stepped portions becomes gradually higher from the center to the periphery of the lead end of the rotating tool.
10. The electrical steel strip friction stir welding method according to any one of 5 to 9, above, wherein a tilt angle $\alpha$ of the rotating tools is 0°.
11. The electrical steel strip friction stir welding method according to any one of 1 to 10, above, wherein, in the cooling process, the cooling is carried out under conditions satisfying the relationships of the following Expressions (10) to (12),

$$CR_{W=0} \geq 15 \qquad \ldots(10)$$

$$CR_{W=0.2D} \geq 15 \qquad \ldots(11)$$

$$CR_{W=0.5D} \geq 15 \qquad \ldots(12)$$

where $CR_{W=0}$, $CR_{W=0.2D}$, and $CR_{W=0.5D}$ are cooling rates in °C/s from a joining end temperature to 450 °C at a surface of the joined portion at $W = 0$, $0.2 \times D$, and $0.5 \times D$, respectively, W is the distance in mm separated from a joining center line of the material to be joined in a perpendicular-to-joining direction, and D is the diameter in mm of shoulders of the rotating tools.
12. The electrical steel strip friction stir welding method according to any one of 1 to 11, above, wherein the cooling device is an inert gas ejection device, a liquid ejection device, or a combination of these devices.
13. A method of producing an electrical steel strip, the method comprising:

joining a first electrical steel strip and a second electrical steel strip by the electrical steel strip friction stir welding method according to any one of 1 to 12, above, to obtain a joined steel strip; and

cold rolling the joined steel strip to obtain a cold-rolled steel strip.

14. A friction stir welding device used in the electrical steel strip friction stir welding method according to any one of 1 to 12, above, the friction stir welding device comprising:

a gripping device configured to grip material to be joined;
a pair of rotating tools facing each other;
a driving device for the rotating tools;
a cooling device disposed behind the rotating tools in the joining direction on at least one side of the material to be joined; and
an operation control device configured to control operation of the gripping device, the driving device for the rotating tools, and the cooling device.

15. The friction stir welding device according to 14, above, further comprising a cooling rate measuring device configured to measure $CR_{W=0}$, $CR_{W=0.2D}$, and $CR_{W=0.5D}$ on both sides of the joined portion formed from the material to be joined,

where $CR_{W=0}$, $CR_{W=0.2D}$, and $CR_{W=0.5D}$ are cooling rates in °C/s from a joining end temperature to 450 °C at a surface of the joined portion at W = 0, $0.2 \times D$, and $0.5 \times D$, respectively, W is the distance in mm separated from a joining center line of the material to be joined in a perpendicular-to-joining direction, and D is the diameter in mm of shoulders of the rotating tools.

16. The friction stir welding device according to 14 or 15, above, wherein the cooling device is an inert gas ejection device, a liquid ejection device, or a combination of these devices.

17. An electrical steel strip production device comprising the friction stir welding device according to any one of 14 to 16, above.

(Advantageous Effect)

According to the present disclosure, even when electrical steel strips are used as the material to be joined, no degradation of mechanical properties or shape of the coil joint occurs, and the occurrence of coil joint fractures in a production line is effectively inhibited. In particular, coarsening of ferrite recrystallized grains caused by plastic working at high temperatures during joining can be prevented, making it possible to very effectively inhibit the occurrence of coil joint fractures, which is very advantageous. Further, joining speed can be increased while suppressing defect generation, thereby achieving high work efficiency. Accordingly, productivity of electrical steel sheets is further improved, and industrial applicability is very high. Further, the electrical steel strip friction stir welding method according to an embodiment of the present disclosure allows the use of a rotating tool without a probe, which is very advantageous in terms of further improving the durability of the rotating tool and thus in decreasing joining failure rates.

BRIEF DESCRIPTION OF THE DRAWINGS

In the accompanying drawings:

FIG. 1A is a schematic diagram for explanation of an electrical steel strip friction stir welding method according to an embodiment of the present disclosure, and is a side perspective view illustrating an example of a butt joint by double-sided friction stir welding with post-cooling;
FIG. 1B is a view from A-A of FIG. 1A;
FIG. 1C is a top view of FIG. 1A;
FIG. 1D is a cross-section view at a joining center line position of FIG. 1A (view from A-A of FIG. 1C);
FIG. 2A is a schematic diagram illustrating an example of shape of a rotating tool with a probe used in an electrical steel strip friction stir welding method according to an embodiment of the present disclosure;
FIG. 2B is a schematic diagram illustrating an example of shape of a rotating tool with a probe used in an electrical steel strip friction stir welding method according to an embodiment of the present disclosure;
FIG. 3 is a schematic diagram illustrating an example of shape of a rotating tool without a probe (flat-end rotating tool) used in an electrical steel strip friction stir welding method according to an embodiment of the present disclosure;
FIG. 4 is a schematic diagram illustrating an example of shape of a rotating tool without a probe (convex-end rotating tool) used in an electrical steel strip friction stir welding method according to an embodiment of the present disclosure;
FIG. 5 is a schematic diagram illustrating an example of shape of a rotating tool without a probe (concave-end rotating tool) used in an electrical steel strip friction stir welding method according to an embodiment of the present disclosure;
FIG. 6 is a schematic diagram illustrating an example of shape of a rotating tool without a probe (flat-end rotating tool with stepped portion) used in an electrical steel strip friction stir welding method according to an embodiment of the present disclosure;

FIG. 7 is a schematic diagram illustrating an example of shape of a rotating tool without a probe (convex-end rotating tool with stepped portion) used in an electrical steel strip friction stir welding method according to an embodiment of the present disclosure;

FIG. 8 is a schematic diagram illustrating an example of shape of a rotating tool without a probe (concave-end rotating tool with stepped portion) used in an electrical steel strip friction stir welding method according to an embodiment of the present disclosure;

FIG. 9 is a diagram for explaining a method of arranging (depicting) spirals at equal intervals with two spirals defining a stepped portion;

FIG. 10 is a diagram for explaining a method of arranging (depicting) spirals at equal intervals with three spirals defining a stepped portion;

FIG. 11 is a diagram for explaining a method of arranging (depicting) spirals at equal intervals with four spirals defining a stepped portion;

FIG. 12 is a diagram for explaining a method of arranging (depicting) spirals at equal intervals with five spirals defining a stepped portion;

FIG. 13 is a diagram for explaining a method of arranging (depicting) spirals at equal intervals with six spirals defining a stepped portion;

FIG. 14 is a schematic diagram illustrating an example of a convex-end rotating tool with a step-like stepped portion;

FIG. 15 is a schematic diagram illustrating an example of a convex-end rotating tool with a grooved stepped portion;

FIG. 16 is a schematic diagram illustrating an example of a flat-end rotating tool with a grooved stepped portion;

FIG. 17 is a schematic diagram of an electrical steel strip welded joint obtained by the electrical steel strip friction stir welding method according to an embodiment of the present disclosure; and

FIG. 18 is a schematic diagram for explanation of an electrical steel strip friction stir welding method according to an embodiment of the present disclosure, and is a top view illustrating an example of a butt joint by double-sided friction stir welding with post-cooling.

DETAILED DESCRIPTION

The following describes embodiments of the present disclosure.

[1] Electrical steel strip friction stir welding method

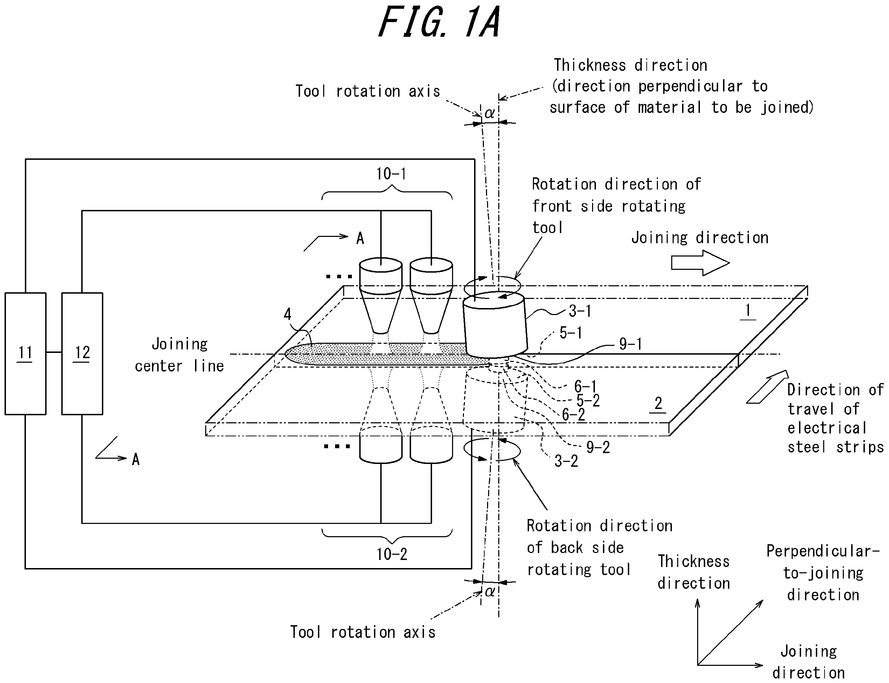

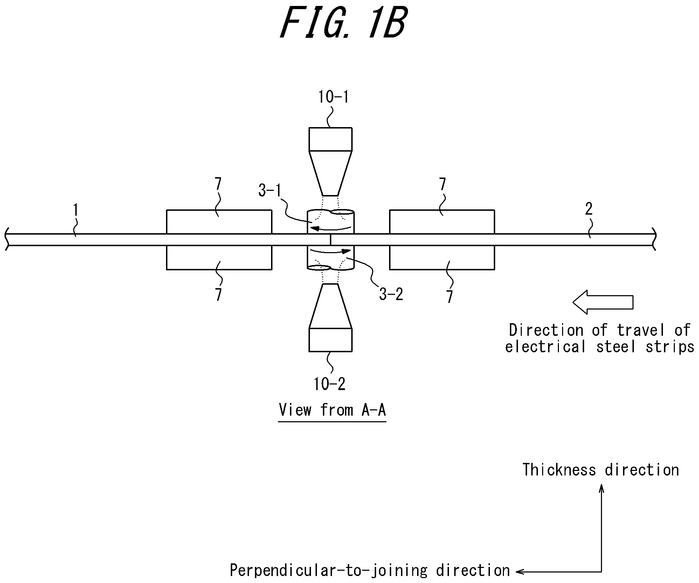

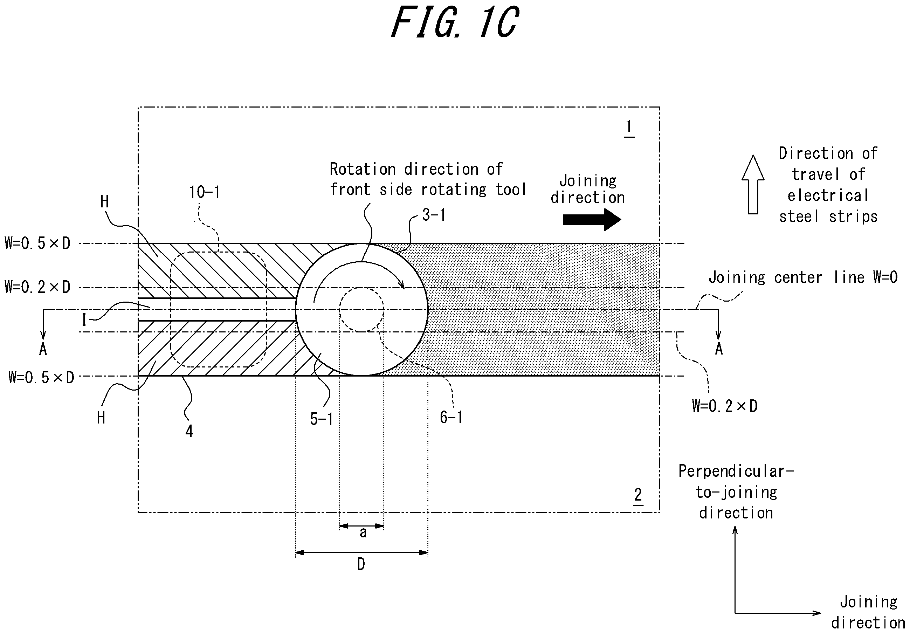

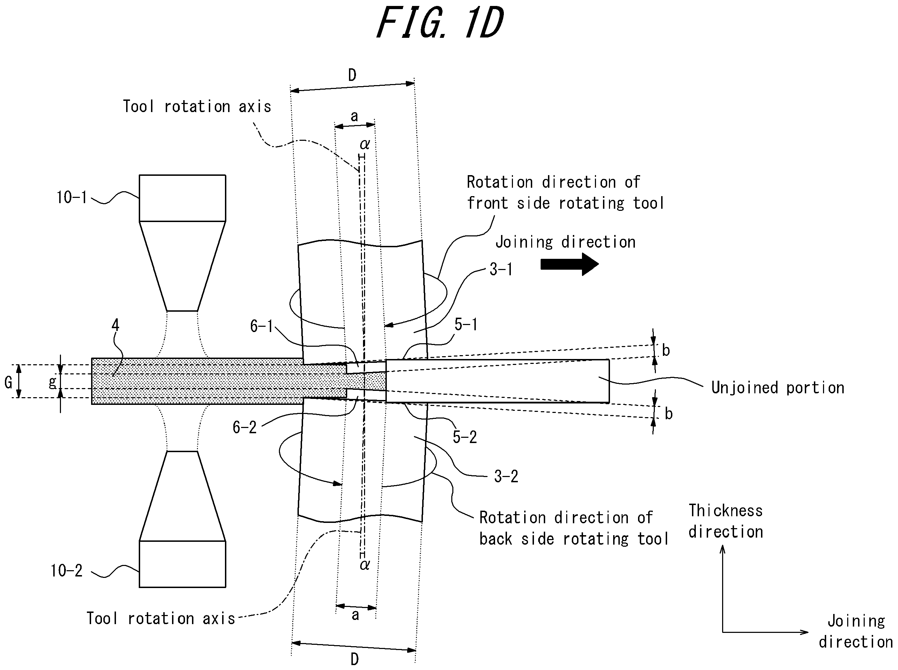

First, the electrical steel strip friction stir welding method according to an embodiment of the present disclosure is described, with reference to FIG. 1A to FIG. 1D. FIG. 1A to FIG. 1D are schematic diagrams for explaining the electrical steel strip friction stir welding method according to an embodiment of the present disclosure, where FIG. 1A is a side perspective view, FIG. 1B is a view from A-A of FIG. 1A, FIG. 1C is a top view of FIG. 1A, and FIG. 1D is a cross-section view at a joining center line position of FIG. 1A.

In the drawings, reference sign 1 indicates a first electrical steel strip (material to be joined), 2 indicates a second electrical steel strip (material to be joined), 3-1 indicates a rotating tool (front side rotating tool), 3-2 indicates a rotating tool (back side rotating tool), 4 indicates a joined portion, 5-1 and 5-2 indicate shoulders, 6-1 and 6-2 indicate probes (pins), 7 indicates a gripping device, 9-1 and 9-2 indicate lead ends, 10-1 indicates a cooling device (front side cooling device), 10-2 indicates a cooling device (back side cooling device), 11 indicates a driving device for the rotating tools, and 12 indicates an operation control device. The gripping device is not illustrated in FIG. 1A. Further, $\alpha$ indicates a tilt angle of the rotating tools (°), a indicates diameter (mm) of a probe (hereinafter also referred to as pin diameter), b indicates length (mm) of the probe (hereinafter also referred to as pin length), D indicates diameter (mm) of the shoulders of the rotating tools, g indicates a gap (mm) between probes, G indicates a gap between the shoulders of the rotating tools, and H and I indicate cooling regions (regions to be cooled) according to the cooling devices. For clarity, the 10-1 cooling device (front side cooling device) is indicated by a dashed line in FIG. 1C. Note that "front" (side) is distinguished from "surface" on first appearance and other places in the Japanese text, as these terms use the same Japanese characters.

Further, in FIG. 1A to FIG. 1D, arrangement is indicated by:

joining direction (direction of travel of the rotating tools),

perpendicular-to-joining direction (direction perpendicular to the joining direction and perpendicular to the thickness direction, coinciding with the width direction of the joined portion and the direction of travel of the electrical steel strips in FIG. 1A to FIG. 1D), and

thickness direction (direction perpendicular to the surface of the material to be joined).

For example, in FIG. 1B, the vertical direction is the thickness direction. The horizontal direction is the perpendicular-to-joining direction. The direction into the page (away from the viewer) is the joining direction. That is, the plane illustrated in FIG. 1B includes the perpendicular-to-joining direction and the thickness direction. Further, the cooling devices 10-1 and 10-2 are disposed farther out of the page (towards the viewer) than the rotating tools 3-1 and 3-2. Similarly, the cooling device 10-1 indicated by the dashed line in FIG. 1C is disposed farther out of the page than the cooling regions H and I.

Electrical steel strip here refers to an intermediate product used as material for producing an electrical steel sheet, in particular an intermediate product at a stage from the end of hot rolling to before heat treatment for primary recrystallization (that is, decarburization annealing or primary recrystallization annealing). An electrical steel strip produced by the method of producing an electrical steel strip according to an embodiment of the present disclosure is obtained by cold rolling after joining the first electrical steel strip and the second electrical steel strip, as described below. Hereinafter, an electrical steel strip of the first electrical steel strip and the second electrical steel strip joined together is also referred to as a joined steel strip, and an electrical steel strip cold rolled from the joined steel strip is also referred to as a cold-rolled steel strip.

The electrical steel strip friction stir welding method according to an embodiment of the present disclosure applies double-sided friction stir welding with post-cooling as electrical steel strip coil joining, as described above, and simultaneously satisfies the relationships in Expressions (1) and (2).

More specifically, the electrical steel strip friction stir welding method according to an embodiment of the present disclosure is:

in a continuous cold rolling line, an electrical steel strip friction stir welding method for joining the first electrical steel strip and the second electrical steel strip as material to be joined by the pair of rotating tools facing each other, the electrical steel strip friction stir welding method comprising:

a joining process of pressing the rotating tools into an unjoined portion of the material to be joined from both sides while rotating the rotating tools in opposite directions, and moving the rotating tools in a joining direction, to join the first electrical steel strip and the second electrical steel strip to form a joined portion; and
a cooling process of cooling the joined portion by a cooling device disposed behind the rotating tools in the joining direction on at least one side of the material to be joined, wherein
the unjoined portion of the material to be joined is a butted portion or an overlapped portion of an end of the first electrical steel strip and an end of the second electrical steel strip following the first electrical steel strip,
the joining process and the cooling process are carried out continuously by moving the rotating tools in the joining direction in conjunction with the cooling device,
the diameter D (mm) of shoulders of the rotating tools satisfies the relationship of Expression (1), and
the rotation speed RS (r/min) of the rotating tools, the diameter D (mm) of the shoulders of the rotating tools, and the joining speed JS (mm/min), expressed as RS $\times$ D$^3$/JS, satisfy the relationship of Expression (2).

Here, butt joints and lap joints are preferred examples of joint types.

In a butt joint, end faces of the first electrical steel strip and the second electrical steel strip face each other, and a rotating tool is pressed against the butted portion including the end faces (butting face) of the first electrical steel strip and the second electrical steel strip while rotating. In this state, the first electrical steel strip and the second electrical steel strip are joined by moving the rotating tool in the joining direction.

In a lap joint, at least a portion of end portions of the first electrical steel strip and the second electrical steel strip are overlapped and a rotating tool is pressed against the overlapped portion while rotating. In this state, the first electrical steel strip and the second electrical steel strip are joined by moving the rotating tool in the joining direction.

Butt joints and lap joints differ only in the form of the unjoined portion and other device configurations are basically the same, and therefore a case of a butt joint by doubled-sided friction stir welding with post-cooling is described as an example, as illustrated in FIG. 1A to FIG. 1D. The double-sided friction stir welding with post-cooling method is a friction stir welding method in which the first electrical steel strip and the second electrical steel strip, the material to be joined, are joined using a pair of rotating tools facing each other to form a joined portion in the material to be joined, and then the joined portion is cooled by a cooling device disposed behind the rotating tools in the joining direction. The first electrical steel strip is joined to the second electrical steel strip by the double-sided friction stir welding with post-cooling method.

In such double-sided friction stir welding with post-cooling, for example, as illustrated in FIG. 1A, a friction stir welding device is used that includes:

a gripping device (not illustrated) configured to grip material to be joined;
a pair of rotating tools facing each other;
a driving device for the rotating tools;
a cooling device disposed behind the rotating tools in the joining direction on at least one side of the material to be joined; and
an operation control device configured to control operation of the gripping device, the driving device for the rotating tools, and the cooling device.

The operation control device controls, for example, the tilt angle $\alpha$ of the rotating tools, the position of the lead ends (probes) of the rotating tools and the distance g between the lead ends (hereinafter also referred to as the gap g between probes), the gap G between the shoulders of the rotating tools, the joining speed (and the speed of the cooling device that moves in conjunction with the rotating tools in the joining direction), the pressure load, rotation speed of the rotating tools, rotation torque, output of the cooling device, and the like.

In double-sided friction stir welding with post-cooling, the rotating tools of the friction stir welding device are disposed on each side of the material to be joined, that is, the first electrical steel strip and the second electrical steel strip (hereinafter also referred to simply as the material to be joined). Further, the cooling device is disposed behind the rotating tools in the joining direction on at least one side of the material to be joined. The rotating tool disposed on the front side of (vertically above) the material to be joined may be referred to as the front side rotating tool, and the rotating tool disposed on the back side of (vertically below) the material to be joined may be referred to as the back side rotating tool. Further, the cooling device disposed on the front side of (vertically above) the material to be joined may be referred to as the front side cooling device, and the cooling device disposed on the back side of (vertically below) the material to be joined may be referred to as the back side cooling device. The first electrical steel strip and the second electrical steel strip are disposed parallel to a joining center line illustrated in the drawings, and are each gripped by the gripping device.

Here, the joining center line is a line that connects set (target) passing positions of the axis of rotation of the rotating tool (on the surface of the material to be joined) during joining, and is parallel to the joining direction. The joining center line can also be the locus of the axis of rotation of the rotating tool (on the surface of the material to be joined) when joining, and normally passes through a center position in the width direction of the joined portion. In the case of a butt joint, the position is, for example, a center position in the perpendicular-to-joining direction of the butted portion of an end (trailing end) of the first electrical steel strip and an end (leading end) of the second electrical steel strip, as illustrated in FIG. 1A to FIG. 1C. In other words, the position is the midpoint between the end (trailing end) of the first electrical steel strip and the end (leading end) of the second electrical steel strip in the perpendicular-to-joining direction. In the case of a lap joint, the position is, for example, a center position of the width (distance in the perpendicular-to-joining direction) of the overlapped portion from the end (trailing end) of the first electrical steel strip to the end (leading end) of the second electrical steel strip.

The rotating tools are pressed on the unjoined portion of the material to be joined (the region to be joined) on the joining center line, that is, the butted portion including the end (trailing end) of the first electrical steel strip and the end (leading end) of the second electrical steel strip, from both sides, while rotating the rotating tools in opposite directions. In this state, the rotating tools are moved in the joining direction. At this time, frictional heat between the material to be joined and the rotating tools softens the material to be joined. The softened site is then stirred by the rotating tool to generate plastic flow to join the material to be joined, that is, the first electrical steel strip and the second electrical steel strip, to obtain a joined portion. The joined portion is then cooled on at least one side by the cooling device disposed behind the rotating tools in the joining direction. In particular, cooling the joined portion with the cooling device after joining helps prevent coarsening of ferrite recrystallized grains caused by plastic working at high temperatures during joining. That is, the joined portion having a very fine ferritic microstructure is obtained, improving joint properties. As a result, the occurrence of coil joint fracture and defects in the production line is very effectively inhibited. Further, joining speed can be increased to a high rate, enabling high work efficiency. In the portion where the joining is completed, the joined portion is formed. Further, the thermo-mechanically affected zone is formed adjacent to the joined portion.

The following is a detailed description of the joining process and the cooling process of the electrical steel strip friction stir welding method according to an embodiment of the present disclosure.

[Joining process]

In the joining process, the rotating tools are pressed against the unjoined portion of the material to be joined from both sides, while rotating in opposite directions. In this state, the first electrical steel strip and the second electrical steel strip, that is, the material to be joined, are joined by moving the rotating tools in the joining direction to obtain the joined portion.

Further, in the joining process, it is important that

- the diameter D (mm) of the shoulders of the rotating tools satisfies the relationship of Expression (1), and
- the rotation speed RS (r/min) of the rotating tools, the diameter D (mm) of the shoulders of the rotating tools, and the joining speed JS (mm/min), expressed as $RS \times D^3/JS$, satisfy the relationship of Expression (2).

That is, the diameter D of the shoulders of the rotating tools (hereinafter also simply referred to as shoulder diameter D) is appropriately controlled according to the thickness of the unjoined portion. This effectively imparts a temperature increase and a shear stress to the material to be joined, that is, the first electrical steel strip and the second electrical steel strip, the temperature increase being due to frictional heat generated between the rotating tool and the material to be joined, and the shear stress being due to frictional force. Here, when the shoulder diameter D is less than $4 \times$ TJ (mm), sufficient plastic flow cannot be obtained, and obtaining the target mechanical properties may be difficult. On the other hand, when the shoulder diameter D exceeds $10 \times$ TJ (mm), the region where plastic flow occurs is unnecessarily expanded, and an excessive amount of heat is introduced into the joined portion. This may coarsen the recrystallized microstructure of the joined portion, making obtaining the target mechanical properties difficult. Therefore, the relationship of Expression (1) is satisfied for the shoulder diameter D.

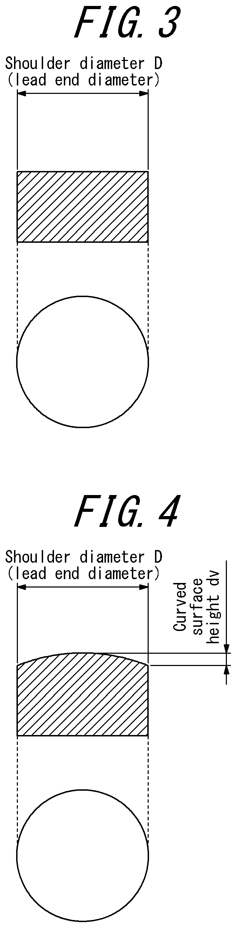

In the case of a rotating tool without a probe, the shoulder diameter D may be a lead end diameter, as illustrated in FIG. 3 to FIG. 5. The lead end diameter is the diameter of the lead end face of the rotating tool in the plane perpendicular to the axis of rotation (the diameter of the projected area when the lead end face of the rotating tool is projected in the direction parallel to the axis of rotation).

Further, $RS \times D^3/JS$ is a parameter that correlates with the amount of heat generated per unit joint length. By setting the range of $RS \times D^3/JS$ from $200 \times TJ$ to $2000 \times TJ$, the temperature rise due to the frictional heat generated between the rotating tools and the material to be joined and the shear stress due to the frictional force may be effectively imparted to the material to be joined, that is, the first electrical steel strip and the second electrical steel strip. Here, when $RS \times D^3/JS$ is less than $200 \times TJ$, the amount of heat generated may be insufficient. Therefore, it may not be possible to form a joining interface in a metallurgically joined state at mating surfaces of the first electrical steel strip and the second electrical steel strip, and obtaining target mechanical properties may become difficult. On the other hand, when $RS \times D^3/JS$ exceeds $2000 \times TJ$, the amount of heat generated by friction stirring becomes excessive, and an excessive amount of heat is introduced into the joined portion. This increases the peak temperature (the maximum arrival temperature), decreases the cooling rate of the joined portion, and coarsens the recrystallized microstructure of the joined portion. As a result, obtaining target mechanical properties may become difficult. Therefore, the relationship of Expression (2) is satisfied for $RS \times D^3/JS$. $RS \times D^3/JS$ is preferably $240 \times TJ$ or more. $RS \times D^3/JS$ is preferably $1200 \times TJ$ or less.

When the rotation speeds RS and/or the shoulder diameter D of the rotating tools are different between the front side rotating tool and the back side rotating tool, the relationships of Expressions (1) and (2) are preferably satisfied for the front side rotating tool and the back side rotating tool, respectively.

In the electrical steel strip friction stir welding method according to an embodiment of the present disclosure, it is preferred that the joining is performed under conditions that the steel microstructures of the joined portion and the thermo-mechanically affected zone formed by the joining of the first electrical steel strip and the second electrical steel strip become mainly ferrite phase and the relationships of Expressions (3) to (6) are satisfied. As a result, even when electrical steel strips are used as the material to be joined, mechanical properties of the coil joint are improved without causing degradation of the shape of the coil joint, and the occurrence of coil joint fractures in a production line is more effectively inhibited.

Further, in the electrical steel strip friction stir welding method according to an embodiment of the present disclosure, the joining is preferably carried out under conditions satisfying the relationships of Expressions (7) and (8). This further effectively inhibits the occurrence of coil joint fracture in the production line.

Description of the material to be joined (the first electrical steel strip and the second electrical steel strip), the joined portion, the thermo-mechanically affected zone, Expressions (3) to (8), and the like, is provided under [2] Electrical steel strip welded joint, below.

Further, in the electrical steel strip friction stir welding method according to an embodiment of the present disclosure, the gap G (mm) between the shoulders of the rotating tools preferably satisfies the relationship of the following Expression (9).

$$0.4 \times \mathrm{TJ} \leq G \leq 0.9 \times \mathrm{TJ} \qquad \ldots(9)$$

That is, in double-sided friction stir welding, appropriately controlling the gap G between the shoulders of the rotating tools (hereinafter also simply referred to as shoulder gap G) is advantageous from the viewpoint of achieving a high joining speed while inhibiting defect occurrence during joining. The shoulder gap G may be said to be the separation distance in the thickness direction between the shoulder of the front side rotating tool and the shoulder of the back side rotating tool. In particular, when the shoulder gap G is in the range from $0.4 \times TJ$ to $0.9 \times TJ$, the shoulders of the rotating tools facing each other are pressed with sufficient load on the front side and the back side of the material to be joined to sufficiently promote heat generation and plastic flow in the thickness direction at the joined portion. This produces a welded joint in better condition. On the other hand, when the shoulder gap G exceeds $0.9 \times TJ$, the shoulders of the rotating tools may not be pressed with sufficient load on the front side and the back side of the material to be joined, and the above effect might not be obtained. Further, when the shoulder gap G is less than $0.4 \times TJ$, the front side and the back side of the joined portion may become excessively concave, which may adversely affect joint strength. The shoulder gap G is therefore preferably in the range from 0.4 × TJ to 0.9 × TJ. The shoulder gap G is more preferably 0.5 × TJ or more. Further, the shoulder gap G is more preferably 0.8 × TJ or less.

Further, in the electrical steel strip friction stir welding method according to an embodiment of the present disclosure, the tilt angle $\alpha$ of the rotating tools is not particularly limited. For example, it is suitable to satisfy the relationship of the following Expression (13) for both the front side rotating tool and the back side rotating tool.

$$0° \leq \alpha \leq 4° \qquad ...(13)$$

Here, $\alpha$ is the tilt angle of the axis of rotation of the rotating tool (hereinafter also referred to as tool rotation axis) from the thickness direction (direction perpendicular to the surface of the material to be joined) in a plane including the joining direction and the thickness direction (direction perpendicular to the surface of the material to be joined). The direction (angle) in which the lead end of the rotating tool leads the joining direction is +ve.

In a rotating tool with a probe, which is typically used in double-sided friction stir welding methods, the tool rotation axis is tilted for both the front side rotating tool and the back side rotating tool. In other words, $0° < \alpha$ is more suitable. Accordingly, the lead end of the probe is ahead in the joining direction, and therefore the rotating tool takes the load on the rotating tool as a compressive force in the direction of the axis of rotation. As a result, bending direction forces are reduced and the risk of fracture of the rotating tool is decreased. Therefore, when using a rotating tool with a probe, it is more suitable to set $0° < \alpha$. Further, it is more suitable to set $\alpha \leq 2°$.

On the other hand, a rotating tool without a probe does not need to consider failure due to local stress concentration on the probe. Therefore, it is more suitable for both the front side rotating tool and the back side rotating tool to have the tilt angle $\alpha$ of the rotating tool be 0°, that is, the tool rotation axis is parallel to the thickness direction in the plane including the joining direction and the thickness direction (the direction perpendicular to the surface of the material to be joined). This results in a concave shape on the front and back surfaces of the joined portion and decreases the ratio of the thickness of the joined portion to the thickness of the material to be joined. As a result, the tendency to adversely affect joint strength can be avoided. Further, there are advantages such as the ability to omit a control mechanism of the device for applying and setting the tilt angle $\alpha$ of the rotating tool. In this case, $\pm 0.3°$ is a suitable tolerance range.

Conditions other than the above are not particularly limited as long as conditions satisfy the relationships of Expressions (1) and (2), and may be in accordance with conventional methods.

For example, the rotation speed of the rotating tools is preferably 300 r/min to 9000 r/min. Keeping the rotation speed of the rotating tools in this range inhibits degradation of mechanical properties due to problematic heat input while maintaining a good surface profile, and is therefore advantageous. The rotation speed of the rotating tools is more preferably 400 r/min or more. The rotation speed of the rotating tools is more preferably 8000 r/min or less.

The joining speed is preferably 800 mm/min or more. The joining speed is preferably 5000 mm/min or less. The joining speed is more preferably 1000 mm/min or more. The joining speed is more preferably 4000 mm/min or less.

The positions of the lead ends of the rotating tools, indentation load, rotation torque, gap between probes, and the like may be set according to conventional methods.

As illustrated in FIG. 1A to FIG. 1D, in the double-sided friction stir welding with post-cooling, the direction of rotation of the front side rotating tool and direction of rotation of the back side rotating tool are opposed when viewed from the front (or back) side of the material to be joined. The rotation speed of the front side rotating tool is preferably the same as the rotation speed of the back side rotating tool. This allows the rotation torques applied to the material to be joined from the front side rotating tool and the back side rotating tool to cancel each other out. As a result, the structure of the jig that holds the material to be joined may be simplified compared to the one-sided friction stir welding method, in which the unjoined portion is pressed from one side.

Further, when the rotation direction of the front side rotating tool and the rotation direction of the back side rotating tool are in the same direction as viewed from the front (or back) side of the material to be joined, the relative speed of one rotating tool to the other approaches zero. As a result, the plastic flow of the material to be joined approaches a homogeneous state and plastic deformation is reduced. Therefore, achieving a good joined state is difficult because heat generation due to plastic deformation of the material is also not obtained. Therefore, from the viewpoint of uniformly obtaining sufficient temperature increase and shear stress in the thickness direction of the material to be joined to achieve a good joined state, the direction of rotation of the front side rotating tool and the direction of rotation of the back side rotating tool are opposed when viewed from the front (or back) side of the material to be joined.

Further, the rotating tools used in the electrical steel strip friction stir welding method according to an embodiment of the present disclosure are also not particularly limited, as long as the relationship of Expression (1) is satisfied, and may be in accordance with conventional methods.

For example, the lead end of the rotating tool is in contact with the material to be joined, that is, the first electrical steel strip and the second electrical steel strip, during joining. Accordingly, the lead end of the rotating tool is made of a harder material than the first electrical steel strip and the second electrical steel strip under the high temperature conditions during joining. This allows the rotating tool to apply deformation to the first electrical steel strip and the second electrical steel strip while maintaining the shape of the lead end during joining. As a result, high stirring capacity is continuously achievable, enabling proper joining. The hardness of the lead ends of the rotating tools, the first electrical steel strip, and the second electrical steel strip may be measured and compared by a high temperature Vickers hardness test. It may suffice that only the lead ends of the rotating tools are made of a material harder than the first electrical steel strip and the second electrical steel strip. Alternatively, the rotating tools may entirely be made of a material harder than the first electrical steel strip and the second electrical steel strip.

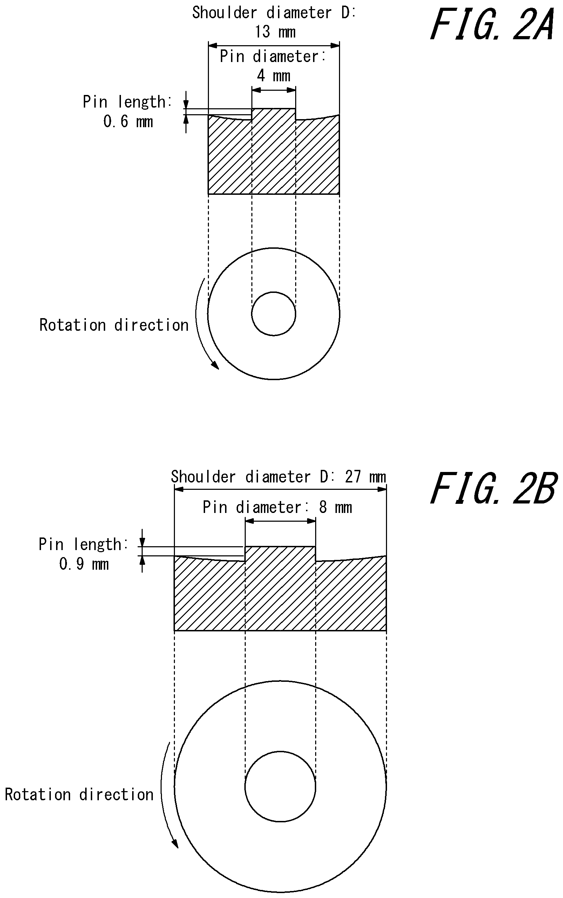

FIG. 2A and FIG. 2B illustrate examples of rotating tools with probes. As illustrated in FIG. 2A and FIG. 2B, the lead ends of the rotating tools with probes each include a shoulder (the range indicated by the shoulder diameter in the drawings) and a probe (the range indicated by the pin diameter in the drawings) disposed on the shoulder and sharing the axis of rotation with the shoulder.

In the rotating tool example illustrated in FIG. 2A, the rotating tool has shoulder diameter D: 13 mm, pin diameter: 4 mm, pin length: 0.6 mm, and concavity depth (not labelled): 0.3 mm.

In the rotating tool example illustrated in FIG. 2B, the rotating tool has a shoulder diameter D: 27 mm, pin diameter: 8 mm, pin length: 0.9 mm, and concavity depth (not labelled): 0.3 mm.

In the rotating tool with a probe, the shoulder presents a flat shape formed by a substantially flat or gently curved surface. The shoulder functions to generate frictional heat through contact with the first electrical steel strip and the second electrical steel strip while rotating during joining. Further, the shoulder functions to press on the heat-softened region to prevent material from separating and to promote plastic flow in the direction of rotation.

The probe is a discontinuous shape with the shoulder and protrudes substantially perpendicularly toward the material to be joined (not illustrated). The probe functions to improve the stirring capacity in the vicinity of the mid-thickness part by penetrating in the mid-thickness direction of the softened portions of the first electrical steel strip and the second electrical steel strip during joining. Further, the probe is typically located in the center of the shoulder.

For the shoulder diameter D (mm), the relationship of Expression (1) is satisfied, as described above. Further, the pin diameter and the pin length of each of the rotating tools are not particularly limited, and may be set as needed in accordance with conventional methods. For example, when butt-joining and the first electrical steel strip and the second electrical steel strip have different thicknesses, an average thickness of the first electrical steel strip and the second electrical steel strip may be considered and the pin diameter, the pin length, and the like of the rotating tools may be set according to conventional methods. Further, when overlap-joining the first electrical steel strip and the second electrical steel strip, the total thickness of the first electrical steel strip and the second electrical steel strip may be considered and the pin diameter, the pin length, and the like of the rotating tools may be set according to conventional methods.

Further, as mentioned above, the probe functions to improve the stirring capacity in the vicinity of the mid-thickness part by penetrating in the mid-thickness direction of the softened portions of the first electrical steel strip and the second electrical steel strip during joining. However, the probe is subjected to greater stress than the shoulder. In this regard, in the electrical steel strip friction stir welding method according to an embodiment of the present disclosure, the stirring capacity is enhanced by simultaneously satisfying the relationships of Expressions (1) and (2). Accordingly, use of a rotating tool without a probe is possible. Rotating tools without probes are more durable than rotating tools with probes. Therefore, use of rotating tools without probes is preferable in terms of durability and extended service life of the rotating tools, and thus in reducing joint failure rates (failures caused by wear and breakage of the rotating tools).

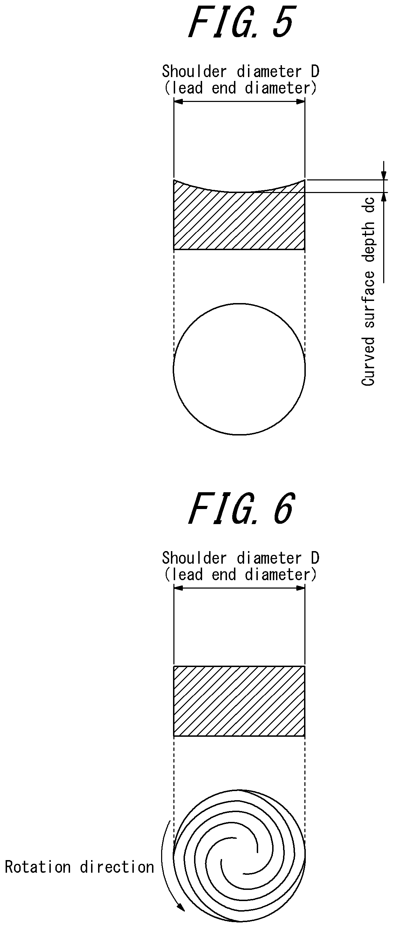

FIG. 3 to FIG. 5 illustrate examples of rotating tools without probes. FIG. 3 illustrates an example of a rotating tool without a probe, the rotating tool having a flat lead end (hereinafter also referred to as a flat-end rotating tool). FIG. 4 illustrates an example of a rotating tool without a probe, the rotating tool having a convex curved lead end (hereinafter also referred to as a convex-end rotating tool). FIG. 5 illustrates an example of a rotating tool without a probe, the rotating tool having a concave curved lead end (hereinafter also referred to as a concave-end rotating tool).

As illustrated in FIG. 3 to FIG. 5, the lead end of a rotating tool without a probe consists only of a shoulder. In other words, the lead end of the rotating tool without a probe does not have a portion (probe) protruding substantially perpendicularly toward the material to be joined that forms a discontinuous shape with the shoulder. The lead end of the rotating tool is preferably, for example, a flat surface as illustrated in FIG. 3, a convex curved surface as illustrated in FIG. 4, or a concave curved surface as illustrated in FIG. 5. Further, the shape of the lead end in the plane perpendicular to the tool rotation axis (the projected area when the lead end face of the rotating tool is projected in the direction parallel to the axis of rotation) is circular.

In a flat-end rotating tool as illustrated in FIG. 3, for example, the lead end in contact with the material to be joined consists of one plane perpendicular to the tool rotation axis.

In a convex-end rotating tool as illustrated in FIG. 4, for example, the lead end in contact with the material to be joined has a continuous shape with no probe and a substantially uniformly sloped surface. More specifically, the lead end constitutes a single curved surface (paraboloid, prolate spherical, or spherical) projecting from the periphery toward the center. Further, as illustrated in FIG. 4, a cross-section of the lead end (cross-section including and parallel to the axis of rotation) has a curved shape with a substantially uniform curvature radius. In addition, the relationship of the following Expression (14) is preferably satisfied for the curved surface height dv (mm) and the shoulder diameter D (mm).

$$\mathrm{dv/D} \leq 0.06 \qquad \ldots(14)$$

That is, by setting dv/D to 0.06 or less, pressure may be applied more effectively to a flow zone when the lead end of the rotating tool contacts the material to be joined, and plastic flow may be generated more effectively. On the other hand, when dv/D exceeds 0.06, the front surface and the back surface of the joined portion may become excessively concave, and the thickness of the joined portion may become small relative to the thickness of the steel strip. In such cases, securing joint strength becomes difficult, which is undesirable. A lower limit of dv/D is not particularly limited. From the viewpoint of applying pressure more effectively to the flow zone, dv/D is preferably 0.01 or more.

In a concave-end rotating tool as illustrated in FIG. 5, the lead end in contact with the material to be joined has a continuous shape with no probe and a substantially uniformly sloped surface. More specifically, the lead end constitutes a single curved surface (paraboloid, prolate spherical, or spherical) recessing from the periphery toward the center. Further, as illustrated in FIG. 5, a cross-section of the lead end (cross-section including and parallel to the axis of rotation) has a curved shape with a substantially uniform curvature radius. In addition, the relationship of the following Expression (15) is preferably satisfied for the curved surface depth dc (mm) and the shoulder diameter D (mm).

$$\mathrm{dc/D} \leq 0.03 \qquad \ldots(15)$$

By setting dc/D to 0.03 or less, softened metal fills the concave curved surface of the lead end during joining. Accordingly, pressure may be applied more effectively to the flow zone when the lead end of the rotating tool contacts the material to be joined, and plastic flow may be generated more effectively. On the other hand, when dc/D exceeds 0.03, effectively applying pressure to the flow zone to generate sufficient plastic flow may be difficult, which is not desirable. A lower limit of dc/D is not particularly limited. From the viewpoint of applying pressure more effectively to the flow zone, dc/D is preferably 0.01 or more.

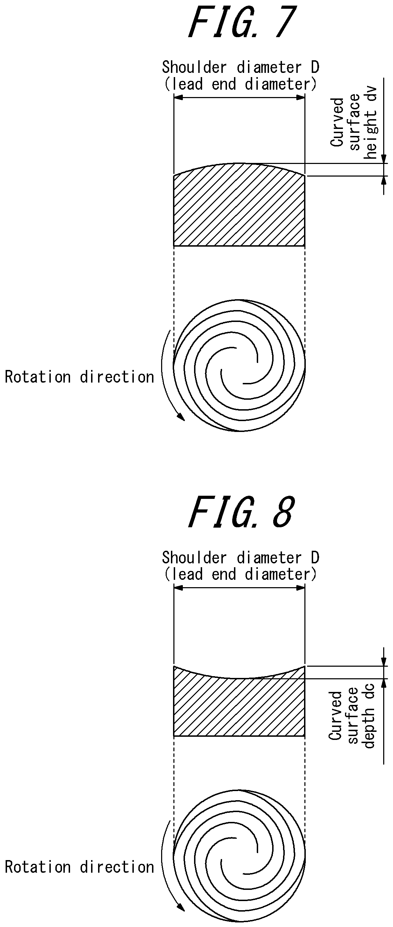

Further, from the viewpoint of further promoting material flow, the lead end of the rotating tool preferably has a spiral-shaped (helical) stepped portion spiraling in the direction opposite rotation. The spiral-shaped stepped portion is defined, for example, by a radial curve (spiral) starting from the center of the lead end of the rotating tool or the periphery of a central circle of the lead end of the rotating tool, as illustrated in FIG. 6 to FIG. 8, and extending to the outer edge of the lead end of the rotating tool. The central circle of the lead end of the rotating tool is a circle of any diameter centered at the center of the lead end of the rotating tool. Further, in FIG. 6 to FIG. 8, the number of spirals is four in each case.

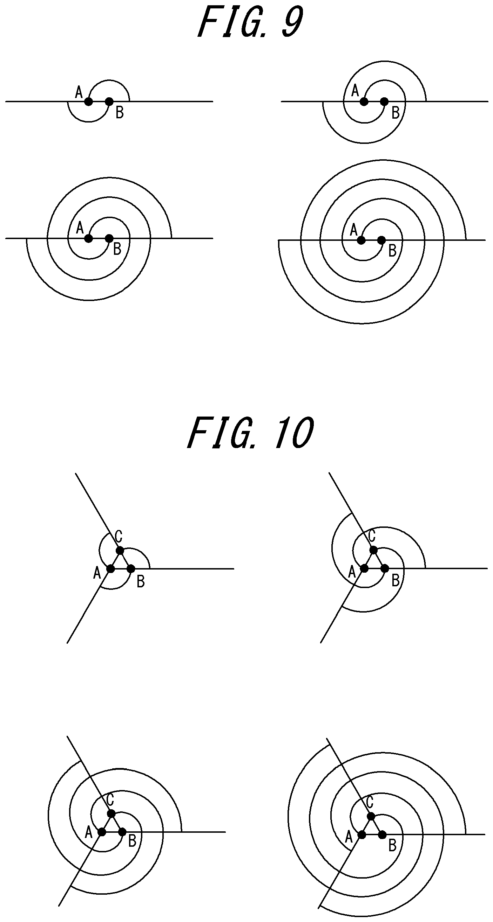

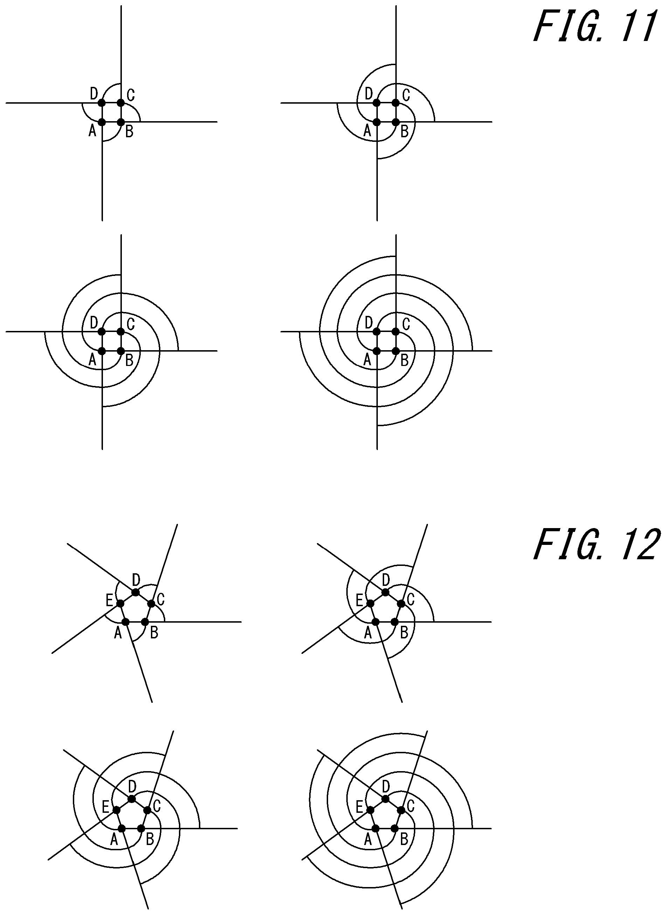

The number of spirals defining the stepped portion may be one or more. However, when the number of spirals defining the stepped portion exceeds six, the effect of promoting material flow becomes less effective. Further, the complexity of the shape may increase susceptibility to breakage. Accordingly, the number of spirals defining the stepped portion is preferably six or less. FIG. 9 to FIG. 13 illustrate examples of cases where the number of spirals defining the stepped portion is from two to six.

Further, from the viewpoint of preventing damage to the lead end of the rotating tool while improving material flow, the number of spirals defining the stepped portion is preferably adjusted according to the shoulder diameter. For example, the larger the shoulder diameter, the greater the number of spirals defining the stepped portion, and the smaller the shoulder diameter, the smaller the number of spirals defining the stepped portion. Specifically, when the shoulder diameter is less than 6 mm, the number of spirals defining the stepped portion is preferably two or less. On the other hand, when the shoulder diameter is 6 mm or more, the number of spirals defining the stepped portion is preferably 3 to 6.

When there are two spirals defining the stepped portion and the spirals are equally spaced, semicircles are drawn with the line segment A-B as radii, starting from point A and point B, respectively, as illustrated in FIG. 9. Then, semicircles having a radius twice the length of the line segment A-B are respectively drawn. Then, semicircles having a radius three times the length of the line segment A-B are respectively drawn. By repeating this process, two equally spaced spirals may be drawn.

When a number n of spirals defining the stepped portion is 3 to 6 and the spirals are equally spaced, as illustrated in FIG. 10 to FIG. 13, a regular n-gon is drawn, and with each vertex of the n-gon as a center start point, an arc with a radius equal to the length of a side of the regular n-gon is drawn to a point where the arc intersects an extension of a side. Then, using the vertex next to the previous vertex as a center, an arc of radius twice the length of the side of the regular n-gon is drawn to the point where the arc intersects the next extension of a side. Then, using the vertex next to the previous vertex as a center, an arc of radius three times the length of the side of the regular n-gon is drawn to the point where the arc intersects the next extension of a side. By repeating this process, n equally spaced spirals may be drawn.

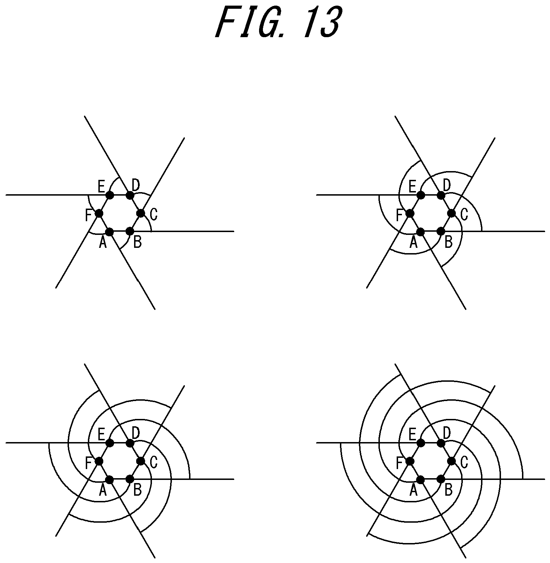

In the case of FIG. 9 to FIG. 13, the number of spirals may be one. In the case of FIG. 9, FIG. 11, and FIG. 13, the number of spirals may be two and the spirals may be equally spaced. In the case of FIG. 10 and FIG. 13, the number of spirals may be three and the spirals may be equally spaced.

In addition, the length of each spiral is preferably 0.5 circumferences of the lead end or more. The length of each spiral is preferably 2 circumferences of the lead end or less. The length of each spiral is preferably adjusted according to the shoulder diameter. For example, preferably, the larger the shoulder diameter, the longer the spiral length, and the smaller the shoulder diameter, the shorter the spiral length.

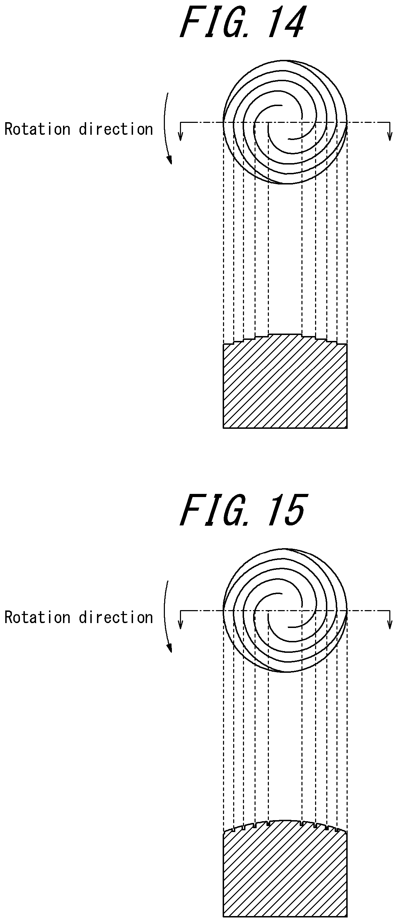

In one example of a convex-end rotating tool, the stepped portion is formed by a step-like change in height for each inter-spiral region, for example, by gradually lowering the height from the center of the lead end toward the periphery, as illustrated in FIG. 14. In the case of a concave-end rotating tool, the stepped portion is structured by gradually raising the height from the center to the periphery. Hereinafter, this form of the stepped portion is also referred to as step-like. The number of steps in the stepped portion is preferably one or more. Further, in a cross-section including and parallel to the axis of rotation (cross-section in FIG. 14), each step may be substantially horizontal, for example.

In another example of a convex-end rotating tool, the stepped portion is formed by providing a recessed region (hereinafter also referred to as a groove) recessed from the lead end at the spiral location, as illustrated in FIG. 15. This forms a stepped portion that gradually lowers from the center of the lead end toward the periphery. In the case of a concave-end rotating tool, the stepped portion is formed that gradually rises from the center of the lead end toward the periphery. Hereinafter, this form of the stepped portion is also referred to as grooved. Examples of cross-section shapes of the grooves include a U shape, a V shape, and a check-mark shape. The number of steps in the stepped portion is preferably one or more.

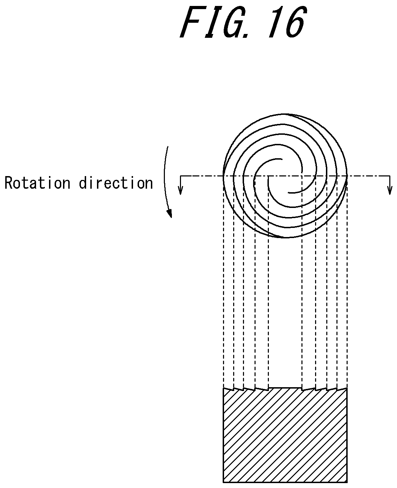

In one example of a flat-end rotating tool, the stepped portion is formed by providing a groove at the spiral location, as illustrated in FIG. 16. Examples of groove shapes include a U shape, a V shape, and a check-mark shape. The number of steps in the stepped portion is preferably one or more.

By providing the stepped portion as described above, the metal material softened by frictional heat flows from the outside to the inside of the rotating tool during pressing and stirring of the material to be joined by the rotating tool. This inhibits metal material flowing out of a pressed zone due to the rotating tool. As a result, plastic flow in the pressed zone is promoted. Further, the thickness of the joined portion may be prevented from decreasing relative to the base metal and a beautiful, burr-free joined portion surface may be formed.

A base portion on the opposite side of the rotating tool from the lead end is preferably able to be attached to commonly conventionally used double-sided friction stir welding equipment, and the shape of the base portion is not particularly restricted.

[Cooling process]

In the cooling process, the cooling device is disposed behind the rotating tools in the joining direction on at least one side of the material to be joined, and the joined portion of the material to be joined formed in the joining process is cooled by the cooling device. By moving the cooling device in conjunction with the rotating tools in the joining direction, the joining process and the cooling process described above can be carried out continuously. Further, cooling the joined portion with the cooling device after joining helps prevent coarsening of ferrite recrystallized grains caused by plastic working at high temperatures during joining. That is, the joined portion having a very fine ferritic microstructure is obtained, improving joint properties. As a result, the occurrence of coil joint fracture and defects in the production line is very effectively inhibited. Further, joining speed can be increased to a high rate, enabling high work efficiency.

Next, referring to FIG. 1C, suitable cooling rate and the like are described, using a case where the cooling devices are disposed on both sides of the material to be joined (hereinafter also referred to as "double-sided arrangement") as an example. Here, cooling rate is the cooling rate from the joining end temperature to 450 °C at the surface of the joined portion. Further, the joining end temperature is the temperature at the surface of the joined portion at joining end time, that is, at the time when the rotating tool passes through. That is, the cooling rate of each part can be calculated by the following Expression.

[Cooling rate (°C/s)] = ([Joining end temperature (°C)] - 450 °C) / [Time (s) from joining end time until temperature at surface of joined portion reaches 450 °C]                 (18)

The cooling rate preferably satisfies the following requirements on both sides of the joined portion formed from the material to be joined. The same effect is obtainable when the cooling device is disposed on only one side of the material to be joined, for example, on the front side (hereinafter also referred to as single-sided arrangement), as long as the cooling rate satisfies the following requirements on both sides of the joined portion formed from the material to be joined. For this reason, specific description of a single-sided arrangement example is omitted.

$$CR_{W=0} \geq 15 \qquad \ldots(10)$$

$$CR_{W=0.2D} \geq 15 \qquad \ldots(11)$$

$$CR_{W=0.5D} \geq 15 \qquad \ldots(12)$$

In the double-sided friction stir welding with post-cooling, it is important to prevent coarsening of ferrite recrystallized grains caused by plastic working at high temperatures during joining, by cooling the joined portion with the cooling device after joining. For this purpose, it is effective to appropriately control the cooling rates in the cooling region I ($0 \leq W \leq 0.1 \times D$ on the surface of the material to be joined) and the cooling region H ($0.1 \times D < W \leq 0.5 \times D$ on the surface of the material to be joined), illustrated in FIG. 1C, and in particular the cooling rates at $W = 0$, $0.2 \times D$, and $0.5 \times D$, which are representative positions in these cooling regions. From this viewpoint, it is preferable to control the cooling rate to satisfy the relationships of Expressions (10) to (12).

Here, W is the distance (mm) in the perpendicular-to-joining direction from the joining center line of the material to be joined, and $CR_{W=0}$, $CR_{W=0.2D}$, and $CR_{W=0.5D}$ are cooling rates in °C/s from the joining end temperature to 450 °C at a surface of the joined portion at $W = 0$, $0.2 \times D$, and $0.5 \times D$, respectively, Further, D is the diameter (mm) of shoulders of the rotating tools. Each of the cooling regions is a surface region of the joined portion that is cooled by the cooling device.

$$0.80 \leq CR_{W=0.2D} / CR_{W=0} \leq 1.20 \qquad \ldots(16)$$

$$0.80 \leq CR_{W=0.5D} / CR_{W=0} \leq 1.20 \qquad \ldots(17)$$

Further, in the cooling process, it is more preferable that the cooling rate of the material to be joined satisfies the relationships of Expressions (10) to (12), and further satisfies the relationships of Expressions (16) and (17). That is, to obtain the effect of preventing coarsening of ferrite recrystallized grains by cooling the joined portion with the cooling device after joining, it is effective to increase the cooling rate of the joined portion. However, when the cooling rate varies with position on the surface of the joined portion, the effectiveness of preventing coarsening of the ferrite recrystallized grains also varies. As a result, the ferrite grain size of the joined portion may also vary. Variations in the ferrite grain size of the joined portion can lead to variations in the mechanical properties of the joined portion, and therefore the ferrite grain size of the joined portion is preferably uniform. To achieve this, it is effective to uniformly control the cooling rate in the cooling region I near the joining center line and in the cooling region H away from the joining center line. In particular, for the cooling rates at the representative positions of $W = 0$, $0.2 \times D$, and $0.5 \times D$ in cooling regions I and H, it is effective to control $CR_{W=0.2D}/CR_{W=0}$, the ratio of $CR_{W=0.2D}$ to $CR_{W=0}$, in the range from 0.80 to 1.20, and to control $CR_{W=0.5D}/CR_{W=0}$, the ratio of $CR_{W=0.5D}$ to $CR_{W=0}$, to 0.80 to 1.20. Therefore, in the cooling process, for the cooling rate, the relationships of Expressions (16) and (17) are more preferably satisfied.

Further, the cooling device used in the cooling process is not particularly limited, and examples include inert gas ejection devices and liquid ejection devices.

In an inert gas ejection device, an inert gas such as argon, helium, carbon dioxide ($CO_2$), nitrogen ($N_2$), and the like may be used. The amount of inert gas ejected may be varied depending on the size of the cooling region of the joined portion and the thermal conductivity and pressure of each gas. Further, the shape and number of gas ejection ports may also be varied depending on the size of the cooling region of the joined portion. By varying these factors, cooling capacity may be secured and uniform cooling can be achieved. That is, the cooling rate can be controlled to satisfy the relationships in Expressions (10) to (12), as well as Expressions (16) and (17).

In a liquid ejection device, a liquid such as water, liquid carbon dioxide, liquid nitrogen, or the like may be used. The amount of liquid ejected and the shape and number of liquid ejection ports may be varied depending on the size of the cooling region of the joined portion, taking into consideration the boiling phenomenon when the liquid comes in contact with the joined portion surface, by, for example, suppressing film boiling and promoting nucleate boiling. By varying these factors, cooling capacity may be secured and uniform cooling can be achieved. That is, the cooling rate can be controlled to satisfy the relationships in Expressions (10) to (12), as well as Expressions (16) and (17).

A device that combines several types of cooling device may be used as the cooling device, for example, a device that combines the inert gas ejection device and the liquid ejection device described above.

Further, the distance between the rotating tools and the cooling device and the extent of the cooling region (hereinafter also referred to as the cooling range) are not particularly limited, as long as the cooling device is disposed behind the rotating tools in the joining (traveling) direction on at least one side of the material to be joined. However, when the distance between the cooling device and the rotating tools becomes too small, there is a risk of insufficient plastic flow in the joined portion, resulting in defects. Therefore, the positional relationship between the cooling device and the rotating tools is preferably determined in consideration of the effect on plastic flow in the joined portion and cooling efficiency, and according to joining speed and the like. For example, when the joining speed is 1 m/min to 4 m/min, the distance between the rotating tools and the cooling device (distance between ends in the joining direction) is preferably in a range from 20 mm to 40 mm. The cooling range may be controlled, for example, by adjusting the type of gas and/or liquid ejected from the cooling device, as well as the shape, number, arrangement, and the like of the ejection ports.

[2] Electrical steel strip welded joint

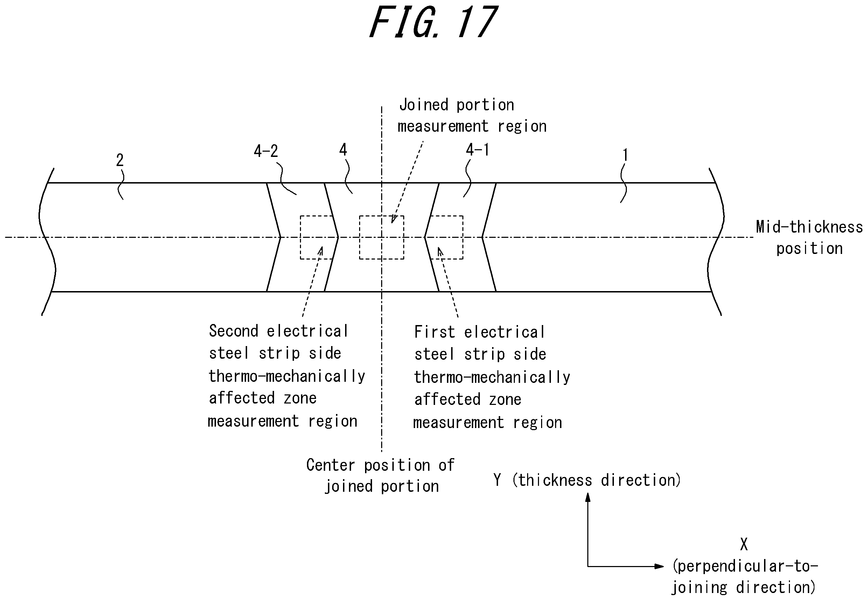

The following is a description of an electrical steel strip welded joint, with reference to FIG. 17. In the drawing, reference sign 1 indicates the first electrical steel strip (material to be joined), 2 indicates the second electrical steel strip (material to be joined), 4 indicates the joined portion, 4-1 indicates the thermo-mechanically affected zone (first electrical steel strip side), and 4-2 indicates the thermo-mechanically affected zone (second electrical steel strip side). FIG. 17 illustrates a thickness direction cross-section view of the electrical steel strip welded joint. In the drawing, the vertical direction is the thickness direction. The horizontal direction is the perpendicular-to-joining direction. The direction out of the page (towards the viewer) is the joining direction. That is, the plane illustrated in FIG. 17 (the thickness direction cross-section) includes the perpendicular-to-joining direction and the thickness direction.

The above-mentioned electrical steel strip welded joint is:

an electrical steel strip welded joint, joining the first electrical steel strip and the second electrical steel strip,
the electrical steel strip welded joint comprising the joined portion and the thermo-mechanically affected zone adjacent to the joined portion, wherein
the steel microstructures of the joined portion and the thermo-mechanically affected zone are mainly ferrite phase, and
the following Expressions (3) to (6) are satisfied.

$$\mathrm{Dsz} \leq 100 \ \mu\mathrm{m} \qquad ...(3)$$

$$\mathrm{Dhaz1} \leq \mathrm{Dbm1} \qquad ...(4)$$

$$\mathrm{Dhaz2} \leq \mathrm{Dbm2} \qquad ...(5)$$

$$0.9 \times (\mathrm{Hbm1} + \mathrm{Hbm2})/2 \leq \mathrm{Hsz} \leq 1.2 \times (\mathrm{Hbm1} + \mathrm{Hbm2})/2 \qquad ...(6)$$

Here,

Dsz is an average value in $\mu$m of ferrite grain size of the joined portion,
Dhazl is an average value in $\mu$m of ferrite grain size of the thermo-mechanically affected zone on a first electrical steel strip side,
Dhaz2 is an average value in $\mu$m of ferrite grain size of the thermo-mechanically affected zone on a second electrical steel strip side,
Dbm1 is an average value in $\mu$m of ferrite grain size of the base metal portion of the first electrical steel strip,
Dbm2 is an average value in $\mu$m of ferrite grain size of the base metal portion of the second electrical steel strip,
Hsz is an average value of hardness of the joined portion,
Hbm1 is an average value of hardness of the base metal portion of the first electrical steel strip, and
Hbm2 is an average value of hardness of the base metal portion of the second electrical steel strip.

Further, the electrical steel strip welded joint may be obtained (produced), for example, by the electrical steel strip friction stir welding method according to an embodiment of the present disclosure, described above.

[Material to be joined (first electrical steel strip and second electrical steel strip)]

The first electrical steel strip and the second electrical steel strip are electrical steel strips that are the material to be joined. The chemical compositions of the first electrical steel strip and the second electrical steel strip are not particularly limited as long as the chemical compositions are typical of electrical steel strips (electrical steel sheets) at a cold rolling stage.

As a chemical composition of such an electrical steel strip, an example is a chemical composition containing Si in a range from 2.0 mass% to 5.0 mass%. Further, the following chemical composition is an example: C: 0.005 mass% or less, Si: 2.0 mass% to 5.0 mass%, Al: 3.0 mass% or less, Mn: 2.00 mass% or less, P: 0.2 mass% or less, S: 0.01 mass% or less, and N: 0.01 mass% or less, with the balance being Fe and inevitable impurity. The above chemical composition may contain at least one selected from the group consisting of, in mass%: Sn: 0.2 % or less, Sb: 0.2 % or less, Ca: 0.01 % or less, REM: 0.05 % or less, and Mg: 0.01 % or less. Further, the above chemical composition may contain at least one element selected from the group consisting of, in mass%: Cr: 1 % or less, Ni: 1 % or less, and Cu: 1 % or less. Elements other than Si and Fe may each be 0 %.

Further, the chemical compositions of the first electrical steel strip and the second electrical steel strip may be the same or different.

The thickness t1 of the first electrical steel strip and the thickness t2 of the second electrical steel strip are not particularly limited. t1 and t2 are respectively preferably from 1.2 mm to 3.2 mm. t1 and t2 may be the same or different.

Further, in the material to be joined, that is, the first electrical steel strip and the second electrical steel strip, a region not affected by hot working due to frictional heat and plastic flow is called the base metal portion.

Further, the base metal portion, as well as the joined portion and the thermo-mechanically affected zone described below, are defined as follows.

The electrical steel strip welded joint is cut in the thickness (vertical) direction so that the plane illustrated in FIG. 17 (that is, the plane including the perpendicular-to-joining direction and the thickness direction) is the cross-section. The cross-section is then polished and etched with a saturated picric acid solution, nital (a solution of nitrate and ethanol) or aqua regia (a solution of concentrated hydrochloric acid and concentrated nitrate mixed in a 3:1 volume ratio). The cross-section is then observed under an optical microscope to determine the degree of etching and the like, and to delineate the base metal portion, the joined portion, and the thermo-mechanically affected zone.

[Joined portion]

The joined portion is the region that undergoes hot working due to frictional heat and plastic flow between the rotating tool and the material to be joined, resulting in a recrystallized microstructure.

The joined portion is composed of a mainly ferrite phase steel microstructure, specifically, with ferrite phase having an area fraction of 95 % or more. The area fraction of the ferrite phase may be 100 %. The area fraction of the residual microstructure other than the ferrite phase is 5 % or less. As the residual microstructure other than the ferrite phase, examples include secondary phases such as martensite, sulfides, nitrides, carbides, and the like. The area fraction of the residual microstructure may be 0 %.

The area fraction of the ferrite phase is measured as follows.

A test piece is cut from the electrical steel strip welded joint so that a joined portion measurement region, described below, is included in an observation plane. The observation plane is the plane illustrated in FIG. 17 (that is, the plane that includes the perpendicular-to-joining direction and the thickness direction). The observation plane of the test piece is then polished and etched with 3 vol% nital, saturated picric acid solution, or aqua regia to reveal the microstructure. Then, in the joined portion measurement region, described below, a total of ten fields of view are captured with an optical microscope at a magnification of 500×. From the obtained microstructure images, the area of ferrite phase is calculated for the ten fields of view using Adobe Photoshop, by Adobe Systems Inc. The area of ferrite phase calculated for each field of view is then divided by the area of the field of view and multiplied by 100. The arithmetic mean of those values is then used as the area fraction of the ferrite phase.

Further, refinement of the steel microstructure of the joined portion is important. Specifically, reducing grain size of ferrite crystal grains of the steel microstructure of the joined portion (hereinafter also referred to as ferrite grain size) to satisfy the relationship of the following Expression (3) is important. As a result, even when electrical steel strips are used as the material to be joined, mechanical properties of the coil joint are improved without causing degradation of the shape of the coil joint, and the occurrence of coil joint fractures in a production line is effectively inhibited.

$$\mathrm{Dsz} \leq 100 \ \mu\mathrm{m} \qquad \ldots(3)$$

Here,
Dsz is an average value in $\mu$m of ferrite grain size of the joined portion.

Here, Dsz is measured in accordance with Japanese Industrial Standard JIS G 0551. Specifically, measurement is made as follows.

The electrical steel strip welded joint is cut in the thickness (vertical) direction so that the plane illustrated in FIG. 17 (that is, the plane including the perpendicular-to-joining direction and the thickness direction) is the cross-section. In the cross-section, the X axis is the perpendicular-to-joining direction and the Y axis is the thickness direction. The origin of the X axis and the Y axis is the center position of the joined portion in the perpendicular-to-joining direction and the mid-thickness position of the material to be joined in the thickness (vertical) direction. The center position of the joined portion in the perpendicular-to-joining direction is, for example, the center position of the butt gap in the case of a butt joint or the center position of the overlapped portion in the case of a lap joint. The mid-thickness position of the material to be joined in the thickness (vertical) direction is, for example, the mid-thickness position of the smaller of the first electrical steel strip and the second electrical steel strip in the case of a butt joint, or the mid-thickness position of the overlapped portion in the case of a lap joint. A region defined as X = -0.2 × t to +0.2 × t and Y = -0.2 × t to +0.2 × t is the measurement region. Here, t is an average value (mm) of thickness of the first electrical steel strip and thickness of the second electrical steel strip. However, when the measurement region includes a region that is not the joined portion, such as the thermo-mechanically affected zone or the base metal portion, such a region is excluded from the measurement region. For the X axis and the Y axis, + and - may be set arbitrarily.

Then, at any position in the measurement region, ferrite grain size of the joined portion is measured a total of five times by the cutting method (evaluated by the number of crystal grains captured per 1 mm of a test line or the number P of intersections) in accordance with JIS G 0551 "Steels - Micrographic determination of the apparent grain size", and the average value of these measurements is Dsz. The measurement region of ferrite grain size of the joined portion is hereinafter also referred to simply as the joined portion measurement region.

Further, reducing a hardness difference between the joined portion and the base metal portion, specifically to satisfy the relationship of the following Expression (6), is important. As a result, even when electrical steel strips are used as the material to be joined, mechanical properties of the coil joint are improved without causing degradation of the shape of the coil joint, and the occurrence of coil joint fractures in a production line is effectively inhibited.

$$0.9 \times (\mathrm{Hbm1} + \mathrm{Hbm2})/2 \leq \mathrm{Hsz} \leq 1.2 \times (\mathrm{Hbm1} + \mathrm{Hbm2})/2 \qquad ...(6)$$

Here,

Hsz is an average value of hardness of the joined portion,
Hbm1 is an average value of hardness of the base metal portion of the first electrical steel strip, and
Hbm2 is an average value of hardness of the base metal portion of the second electrical steel strip.

Here, Hsz, Hbm1, and Hbm2 are measured in accordance with JIS Z 2244. Specifically, each is measured as follows.

Vickers hardness (HV) is measured at any five locations in the joined portion measurement region on the cross-section under a condition of test force: 4.9 N. The average of these values is then taken as Hsz.

Further, on the cross-section, Vickers hardness (HV) is measured at any five locations in a region ±0.2 × t1 (level in the thickness (vertical) direction) from the mid-thickness position of the base metal portion of the first electrical steel strip and any five locations in a region ±0.2 × t2 (level in the thickness (vertical) direction) from the mid-thickness position of the base metal portion of the second electrical steel strip, under the test force of 4.9 N. The position along the perpendicular-to-joining (horizontal) direction may be selected arbitrarily, as long as the position is in the base metal portion. The average values of Vickers hardness (HV) measured on the base metal portion of the first electrical steel strip and the base metal portion of the second electrical steel strip are Hbm1 and Hbm2, respectively. Here, t1 and t2 are the thicknesses of the first electrical steel strip and the second electrical steel strip, respectively.

Further, the thickness of the joined portion is not particularly limited. Preferably, the thickness of the joined portion is appropriately controlled in relation to the thicknesses of the first electrical steel strip and the second electrical steel strip. Specifically, the relationships of the following Expressions (7) and (8) are preferably satisfied. As a result, even when electrical steel strips are used as the material to be joined, mechanical properties of the coil joint are further improved without causing degradation of the shape of the coil joint, and the occurrence of coil joint fractures in a production line may be more effectively inhibited.

$$0.8 \times \mathrm{TbmL} \leq \mathrm{TszL} \qquad ...(7)$$

$$\mathrm{TszH} \leq 1.3 \times \mathrm{TbmH} \qquad ...(8)$$

Here,

TszL is the minimum value in mm of the thickness of the joined portion,
TszH is the maximum value in mm of the thickness of the joined portion,
TbmL is the thickness in mm of the thinner of the first electrical steel strip and the second electrical steel strip, and
TbmH is the thickness in mm of the thicker of the first electrical steel strip and the second electrical steel strip.

When the thicknesses of the first electrical steel strip and the second electrical steel strip are the same, TbmL = TbmH.

TszL and TszH may be measured as follows, for example. The electrical steel strip welded joint is cut in the thickness (vertical) direction so that the plane illustrated in FIG. 17 (that is, the plane including the perpendicular-to-joining direction and the thickness direction) is the cross-section. Then, TszL and TszH are measured at the cross-section using a caliper or the like.

[Thermo-mechanically affected zone]

The thermo-mechanically affected zone is adjacent to the joined portion and is a region affected by hot working due to frictional heat and plastic flow, but the temperature and working are insufficient to reach a recrystallized microstructure. Further, the thermo-mechanically affected zone is formed on both sides of the first electrical steel strip and the second electrical steel strip adjacent to the joined portion.

The thermo-mechanically affected zone, like the joined portion, is a mainly ferrite phase steel microstructure, specifically, a ferrite phase having an area fraction of 95 % or more. The area fraction of the ferrite phase may be 100 %. The area fraction of the residual microstructure other than the ferrite phase is 5 % or less. As the residual microstructure other than the ferrite phase, examples include secondary phases such as martensite, sulfides, nitrides, carbides, and the like. The area fraction of the residual microstructure may be 0 %. The area fraction of the ferrite phase may be measured by the same method as described above.

Further, the steel microstructure of the thermo-mechanically affected zone is refined. Specifically, ferrite grain size in the thermo-mechanically affected zone is equal to or less than the ferrite grain size in the base metal portion. That is, satisfying the relationships of the following Expressions (4) and (5) is important.

$$Dhaz1 \leq Dbm1 \qquad ...(4)$$

$$Dhaz2 \leq Dbm2 \qquad ...(5)$$

Here,

Dhazl is an average value in $\mu$m of ferrite grain size of the thermo-mechanically affected zone on a first electrical steel strip side,
Dhaz2 is an average value in $\mu$m of ferrite grain size of the thermo-mechanically affected zone on a second electrical steel strip side,
Dbm1 is an average value in $\mu$m of ferrite grain size of the base metal portion of the first electrical steel strip, and
Dbm2 is an average value in $\mu$m of ferrite grain size of the base metal portion of the second electrical steel strip.

Here, Dhaz1, Dhaz2, Dbm1, and Dbm2 are measured in the same manner as Dsz, the average value of ferrite grain size of the joined portion, according to JIS G 0551.

Further, the measurement region of the ferrite grain size of the thermo-mechanically affected zone on the first electrical steel strip side (hereinafter also referred to as the first electrical steel strip side thermo-mechanically affected zone measurement region) is set as follows. The electrical steel strip welded joint is cut in the thickness (vertical) direction so that the plane illustrated in FIG. 17 (that is, the plane including the perpendicular-to-joining direction and the thickness direction) is the cross-section. In the cross-section, the X axis is the perpendicular-to-joining direction and the Y axis is the thickness direction. A boundary position between the joined portion and the thermo-mechanically affected zone on the first electrical steel strip side at the mid-thickness position (level) of the first electrical steel strip is the origin of the X axis and the Y axis. For the X axis, the first electrical steel strip side is +ve and the joined portion side is -ve, and the measurement region is a region defined as X = 0 to +0.4 × t1 and Y = -0.2 × t1 to +0.2 × t1. Here, t1 is the thickness of the first electrical steel strip. For the Y axis, + and - may be set arbitrarily. However, when the measurement region includes a region that is not the thermo-mechanically affected zone on the first electrical steel strip side, such as the joined portion or the base metal portion, such a region is excluded from the measurement region.

As mentioned above, the joined portion is the region that undergoes hot working due to frictional heat and plastic flow between the rotating tool and the material to be joined, resulting in a recrystallized microstructure. The thermo-mechanically affected zone is a region adjacent to the joined portion and is affected by hot working due to frictional heat and plastic flow, but the temperature and working are insufficient to reach a recrystallized microstructure. The base metal is the region unaffected by hot working due to frictional heat and plastic flow.

Similarly, the measurement region of the ferrite grain size of the thermo-mechanically affected zone on the second electrical steel strip side (hereinafter also referred to as the second electrical steel strip side thermo-mechanically affected zone measurement region) is set as follows. The electrical steel strip welded joint is cut in the thickness (vertical) direction so that the plane illustrated in FIG. 17 (that is, the plane including the perpendicular-to-joining direction and the thickness direction) is the cross-section. In the cross-section, the X axis is the perpendicular-to-joining direction and the Y axis is the thickness direction. A boundary position between the joined portion and the thermo-mechanically affected zone on the second electrical steel strip side at the mid-thickness position (level) of the second electrical steel strip is the origin of the X axis and the Y axis. For the X axis, the second electrical steel strip side is +ve and the joined portion side is -ve, and the measurement region is a region defined as X = 0 to +0.4 × t2 and Y = -0.2 × t2 to +0.2 × t2. Here, t2 is the thickness of the second electrical steel strip. For the Y axis, + and - may be set arbitrarily. However, when the measurement region includes a region that is not the thermo-mechanically affected zone on the second electrical steel strip side, such as the joined portion or the base metal portion, such a region is excluded from the measurement region.

Further, the measurement regions of ferrite grain size of the base metal portions of the first electrical steel strip and the second electrical steel strip (hereinafter also referred to as the first electrical steel strip and second electrical steel strip base metal portion measurement regions) may be, on the cross-section, a region of ±0.2 × t1 from the mid-thickness position of the base metal portion of the first electrical steel strip (level in the thickness (vertical) direction) and a region of ±0.2 × t2 from the mid-thickness position of the base metal portion of the second electrical steel strip (level in the thickness (vertical) direction), respectively. The position along the perpendicular-to-joining (horizontal) direction may be selected arbitrarily, as long as the position is in the base metal portion. Here, t1 and t2 are the thicknesses of the first electrical steel strip and the second electrical steel strip, respectively.

Examples of joint types include butt joints and lap joints.

[3] Method of producing electrical steel strip

The following describes a method of producing an electrical steel strip according to an embodiment of the present disclosure.

The method of producing an electrical steel strip according to an embodiment of the present disclosure includes:

joining the first electrical steel strip and the second electrical steel strip by the electrical steel strip friction stir welding method according to an embodiment of the present disclosure to obtain a joined steel strip; and
cold rolling the joined steel strip to obtain a cold-rolled steel strip.

Here, the joined steel strip preferably includes the first electrical steel strip, the second electrical steel strip, and the electrical steel strip welded joint as described under [2], above, where the first electrical steel strip and the second electrical steel strip are joined via the electrical steel strip welded joint.

Further, cold rolling conditions are not particularly limited, and may be in accordance with a conventional method. Further, after joining the first electrical steel strip and the second electrical steel strip, pickling may optionally be carried out before cold rolling.

[4] Friction stir welding device

The following describes a friction stir welding device according to an embodiment of the present disclosure.

The friction stir welding device according to an embodiment of the present disclosure is a friction stir welding device used for the electrical steel strip friction stir welding method as described under [1], above, and includes:

a gripping device configured to grip material to be joined;
a pair of rotating tools facing each other;
a driving device configured to enable the rotating tools to rotate and to move in the joining direction;
a cooling device disposed behind the rotating tools in the joining direction on at least one side of the material to be joined; and
an operation control device configured to control operation of the gripping device, the driving device for the rotating tools, and the cooling device.

Here, examples of the gripping device include:

• a movable gripping member and a sliding device for the movable gripping member, and
• a fixed gripping member, a movable gripping member, and a sliding device for the movable gripping member.

The rotating tools are as exemplified in the electrical steel strip friction stir welding method described under [1], above.

Examples of the driving device for the rotating tools include a rotary drive unit for the rotating tools and a moving device for moving the rotating tools in the joining direction. The rotary drive unit and the moving device are not particularly limited, and may be, for example, an electric drive system.

The cooling device is as exemplified in the electrical steel strip friction stir welding method described under [1], above. Further, the cooling device is attached to a moving device that moves the cooling device in the joining direction in conjunction with the rotating tools. The drive system of the moving device is not particularly limited, and may be, for example, an electric drive system.

The operation control device may include, for example: an input interface for inputting various setting values and the like; an arithmetic section that executes arithmetic processing of the input data; a storage device that stores the data and the like; and an output interface that outputs operation signals to the gripping device, the rotating tools driving device, and the cooling device, based on results of the arithmetic processing at the arithmetic section.

Further, from the viewpoint of controlling the cooling rate at the surface of the joined portion of the material to be joined within the ranges of Expressions (10) to (12), (16), and (17), a cooling rate measuring device is preferably further included that measures $CR_{W=0}$, $CR_{W=0.2D}$, and $CR_{W=0.5D}$ on both sides of the material to be joined.

The cooling rate measuring device includes, for example, a temperature measuring device that continuously measures the temperature at the surface of the joined portion. Examples of the temperature measuring device include a plurality of radiation thermometers installed for measuring the temperature at the surface of the joined portion at the positions $W = 0, 0.2 \times D, 0.5 \times D$, or a thermographic device (set to measure the temperature over a range including the positions $W = 0, 0.2 \times D, 0.5 \times D$). Then, based on the temperature measured by the temperature measuring device and the time from the joining end time until the temperature at the surface of the joined portion reaches 450 °C, $CR_{W=0}$, $CR_{W=0.2D}$, and $CR_{W=0.5D}$ are calculated using, for example, a calculation device or a calculation function attached to the thermographic device, according to Expression (18).

Other than the above, there are no particular limitations on device configuration and the like, and the device configuration of a conventionally known friction stir welding device may be used.

[5] Electrical steel strip production device

The following describes an electrical steel strip production device according to an embodiment of the present disclosure.

The electrical steel strip production device according to an embodiment of the present disclosure includes the friction stir welding device described under [4], above.

Further, in the electrical steel strip production device according to an embodiment of the present disclosure, in a continuous cold rolling line, the friction stir welding device described under [4], above, is disposed upstream of the cold rolling device, or upstream of a pickling device and the cold rolling device (from upstream, in the order of the friction stir welding device, the pickling device, and the cold rolling device). The pickling device and the cold rolling device are preferably devices typically used in continuous cold rolling lines for electrical steel strips.

Further, a continuous cold rolling line is a production line where steel strips are continuously cold rolled by a cold rolling device. The continuous cold rolling line includes, for example, a steel strip conveyor and the cold rolling device. The continuous cold rolling line may optionally be accompanied by the pickling device, an annealing furnace, a coating device, and the like.

Other than described above, there are no particular limitations on the device configuration and the like, and the device configuration may be that of conventionally known electrical steel strip production devices.

EXAMPLES

Functions and effects of the present disclosure are described below with reference to examples. However, the present disclosure is not limited to the following examples.

Electrical steel strips having the chemical compositions listed in Table 1 (the balance being Fe and inevitable impurity) were used as the material to be joined (the first electrical steel strip and the second electrical steel strip). The first electrical steel strip (preceding steel strip) and the second electrical steel strip (trailing steel strip) were then joined by friction stir welding with post-cooling under the joining conditions and the cooling conditions listed in Table 2, simulating being on a continuous cold rolling line, to produce the electrical steel strip welded joint. Here, in the case of a butt joint, the groove was a so-called I-type groove with no groove angle to the ends of the two electrical steel strips to be joined, and the two electrical steel strips were butted and joined with a surface state equivalent to that of milling. Average values of ferrite grain size, average values of hardness, and Erichsen values of the base metal portion of the electrical steel strips are also listed in Table 1. Here, the average values of ferrite grain size and the average values of hardness of the base metal portion of the electrical steel strips were obtained by the methods described above. Further, the Erichsen values were measured in accordance with the Erichsen test method specified in JIS Z 2247. Conditions not specified were set in accordance with conventional methods.

In the joining process, the front side rotating tool disposed on the vertically upper side was rotated clockwise when viewed from the vertically upper side, and the back side rotating tool disposed on the vertically lower side was rotated counterclockwise when viewed from the vertically upper side. That is, both were rotated counterclockwise when viewed from in front of the lead end of the rotating tool. Further, in each case, one of the rotating tools with the shapes illustrated in FIG. 2A to FIG. 8 was used. Further, the front side rotating tool and the back side rotating tool had the same cross-section dimensions and shape as each other. Each of the rotating tools was made of tungsten carbide (WC) having a Vickers hardness of HV 1090, which was harder than the material to be joined. Further, when the thicknesses of the first electrical steel strip and the second electrical steel strip were different, the butted portion of the first electrical steel strip and the second electrical steel strip was made with the back side (the side where the back side rotating tool was disposed) having no step and the front side (the side where the front side rotating tool was disposed) having a step. Further, the first electrical steel strip (preceding steel strip) was joined as the advancing side and the second electrical steel strip (trailing steel strip) was joined as the retreating side.

Further, in the case of a lap joint, joining was performed so that the first electrical steel strip (preceding steel strip) was on the upper side of the overlap and the second electrical steel strip (trailing steel strip) was on the lower side of the overlap. The direction of rotation of the rotating tools and the shape of the rotating tools were the same as in the case of a butt joint.

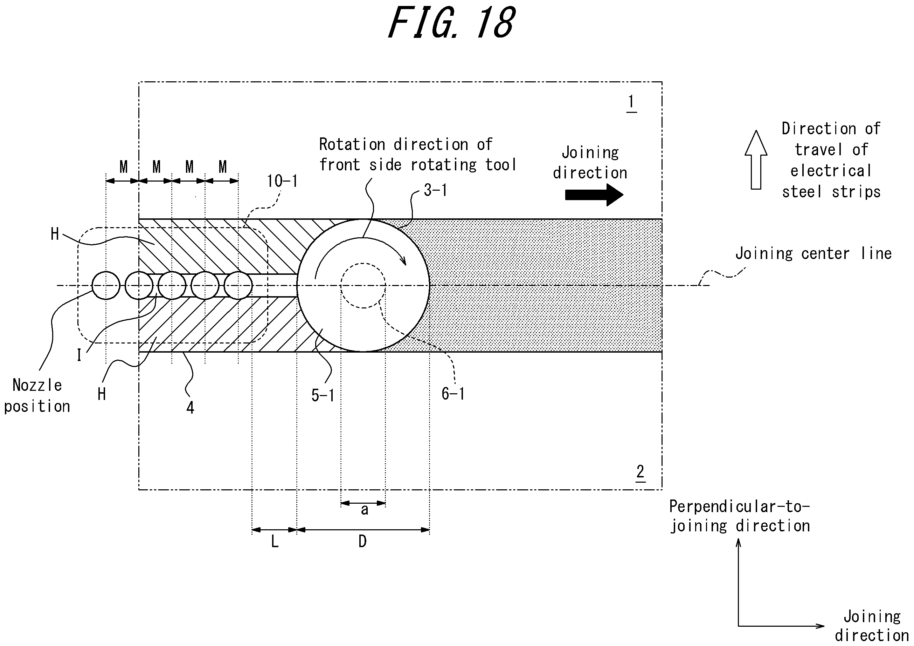

In the cooling process, the cooling device disposed behind the rotating tools in the joining direction was moved in conjunction with the rotating tools (at the same speed as the joining speed) in the joining direction. Further, an inert gas ejection device was used for the cooling device. Further, carbon dioxide was used as the inert gas. More specifically, the cooling device was configured to have five nozzles with round ejection ports each having a diameter of 4 mm arranged in a line along the joining line center, as illustrated in FIG. 18. Further, the distance from the rear end of the rotating tool to the first ejection port (lead end) of the cooling device (L in FIG. 18) and the distance between (the center point of) each ejection port (M in FIG. 18) were both 30 mm. Further, the distance from the surface of the joined portion to the ejection port was 20 mm in each case. Carbon dioxide gas was ejected from each ejection port at a pressure of 1 MPa. Further, the surface temperature of the joined portion was measured on both sides of the material to be joined by a thermographic device installed in the friction stir welding device, and the cooling rate at each location on the surface of the joined portion was measured. The measured cooling rates are listed in Table 2. Cooling rates $CR_{W=0.2}$ and $CR_{W=0.5}$ were measured on both the advancing side (first electrical steel strip side) and the retreating side (second electrical steel strip side) across the joining center line, and were almost the same. Therefore, only the cooling rate at the advancing side is described here as a representative value. Further, for comparison, cooling by the cooling device was not carried out under some conditions.

For the electrical steel strip welded joints thus obtained, the joined portion, the thermo-mechanically affected zone, and the base metal portion were defined as described above.

Further, the following were measured as described above:

Dsz: average value ($\mu$m) of ferrite grain size of the joined portion,
Dhazl: average value ($\mu$m) of ferrite grain size of the thermo-mechanically affected zone on the first electrical steel strip side,
Dhaz2: average value ($\mu$m) of ferrite grain size of the thermo-mechanically affected zone on the second electrical steel strip side,
Dbm1: average value ($\mu$m) of ferrite grain size of the base metal portion of the first electrical steel strip,
Dbm2: average value ($\mu$m) of ferrite grain size of the base metal portion of the second electrical steel strip,
Hsz: average value of hardness of the joined portion,
Hbm1: average value of hardness of the base metal portion of the first electrical steel strip, and
Hbm2: average value of hardness of the base metal portion of the second electrical steel strip.

Further, cross-sections in the vertical direction of the electrical steel strip welded joints (the plane illustrated in FIG. 17 (that is, the plane including the perpendicular-to-joining direction and the thickness direction)) were each measured for TszL: minimum value (mm) of joined portion thickness and TszH: maximum value (mm) of joined portion thickness.

Results are listed in Table 3. The above measurements were omitted when defects were identified in the checking of surface defects and internal defects described below. Further, when surface defects were identified, checking of internal defects was also omitted.

The electrical steel strip welded joints were checked for (I) presence of surface defects and (II) presence of internal defects according to the following procedures. The results are listed in Table 4.

(I) Presence of surface defects

The front side and back side of the joined portion and the thermo-mechanically affected zone of the electrical steel strip welded joints were visually checked for the presence of an unjoined state and cracking. The presence or absence of surface defects was then judged according to the following criteria.

Surface defect: no means that an unjoined state and cracking were not identified.

Surface defect: yes means that at least one of an unjoined state or cracking was identified.

(II) Presence of internal defects

The electrical steel strip welded joints were cut in the thickness (vertical) direction so that the plane illustrated in FIG. 17 (that is, the plane including the perpendicular-to-joining direction and the thickness direction) became the observation plane, and test pieces were collected. The cutting positions along the joining direction were 20 mm from an end of the material to be joined on a side where joining (welding) started, 20 mm from an end of the material to be joined on a side where joining (welding) ended, and at the midpoint between both ends of the material to be joined. From each electrical steel strip welded joint, a total of three test pieces were taken so that the cross-section at the relevant cutting position became the observation plane. The observation plane of each obtained test piece was then observed under an optical microscope (magnification: 10×). The presence or absence of internal defects was then judged according to the following criteria.

Internal defect: no means that an unjoined state and cracking were not identified in the joined portion of all three test pieces.

Internal defect: yes means that at least one of an unjoined state or cracking was identified in the joined portion in at least one of the test pieces.

The electrical steel strip welded joints were evaluated for effectiveness in inhibiting the occurrence of coil joint fractures in a production line (hereinafter also referred to as fracture inhibition effect) in the following way.

Test pieces were collected from each of the electrical steel strip welded joints so that the joined portion, the thermo-mechanically affected zone and base metal on the first electrical steel strip side, and the thermo-mechanically affected zone and base metal on the second electrical steel strip side were included. Then, using the collected test pieces, the Erichsen values of the welded joints were measured in accordance with the Erichsen test method specified in JIS Z 2247. The ratio of the Erichsen value of the welded joint to the Erichsen value of the base metal portion (hereinafter also referred to as the Erichsen value ratio) was used to evaluate the fracture inhibition effect based on the following criteria. The results are listed in Table 4.

[Erichsen value ratio (%)] = [Erichsen value of welded joint] / [Erichsen value of base metal portion] × 100

Pass: Erichsen value ratio of 90 % or more
Fail: Erichsen value ratio of less than 90 %

When the Erichsen value of the base metal portion of the first electrical steel strip and the Erichsen value of the base metal portion of the second electrical steel strip were different, the Erichsen value of the base metal portion was considered to be the smaller of the Erichsen value of the base metal portion of the first electrical steel strip and the Erichsen value of the base metal portion of the second electrical steel strip.

Further, durability of the rotating tools was evaluated according to the following procedure.

When the rotating tools are damaged or worn, joining failures due to internal defects occur at a high rate. Therefore, joining was repeated with a joint length of 0.5 m under the same conditions as above, and the resulting welded joints were judged for the presence or absence of internal defects by the judgment method described under "(II) Presence of internal defects" above.

The durability of the rotating tools was evaluated based on the maximum number of joints at which 90 % or more of the total number of joints were judged to be free of internal defects (hereinafter also referred to as 90 % maintained maximum joint number). 90 % maintained maximum joint numbers are listed in Table 4. When the 90 % maintained maximum joint number is 15 or more times, the durability (life) of the rotating tool is excellent (Pass), and when the 90 % maintained maximum joint number is less than 15 times, the durability (life) of the rotating tool is not sufficient (Fail).

Here, when checking for presence of internal defects in the welded joints in the order of joining, and N is the number of the welded joints checked for presence of internal defects, the 90 % maintained maximum joint number is the maximum value of N that satisfies the following Expression (a).

[number of welded joints judged to be free of internal defects among welded joints checked for internal defects] ÷ [number of welded joints checked for internal defects N] × 100 ≥ 90    (a)

For example, when the welded joints obtained from the 1st to 4th joins are judged to have no internal defects, but the welded joint obtained from the 5th join is judged to have an internal defect:
when N = 4, [number of welded joints judged to be free of internal defects among welded joints checked for internal defects] ÷ [number of welded joints checked for internal defects N] × 100 = 4 ÷ 4 × 100 = 100 ≥ 90 and
when N = 5, [number of welded joints judged to be free of internal defects among welded joints checked for internal defects] ÷ [number of welded joints checked for internal defects N] × 100 = 4 ÷ 5 × 100 = 80 < 90

That is, in this case, Expression (a) is satisfied up to N = 4, and Expression (a) is not satisfied from N = 5, so the 90 % maintained maximum joint number is 4.

Further, when the welded joints obtained from the 1st to 10th and 12th to 19th joins are judged to have no internal defects, but the welded joints obtained from the 11th, 20th, and 21st joins are judged to have an internal defect:
when N = 11, [number of welded joints judged to be free of internal defects among welded joints checked for internal defects] ÷ [number of welded joints checked for internal defects N] × 100 = 10 ÷ 11 × 100 ≈ 90.9 ≥ 90 and
when N = 20, [number of welded joints judged to be free of internal defects among welded joints checked for internal defects] ÷ [number of welded joints checked for internal defects N] × 100 = 18 ÷ 20 × 100 = 90 ≥ 90 and
when N = 21, [number of welded joints judged to be free of internal defects among welded joints checked for internal defects] ÷ [number of welded joints checked for internal defects N] × 100 = 18 ÷ 21 × 100 = 85.7 < 90

In other words, in this case, Expression (a) is satisfied up to N = 20, and Expression (a) is not satisfied from N = 21, so the 90 % maintained maximum joint number is 20.

The 90 % maintained maximum joint number was 0 for welded joints judged to have defects in (I) Presence of surface defects or (II) Presence of internal defects as described above.

[Table 1]

Table 1

| Steel sample ID | Thickness (mm) | Chemical composition (mass%) | | | | | Average ferrite grain size in base metal portion ($\mu$m) | Average hardness of base metal portion | Erichsen value of base metal portion (mm) |
|---|---|---|---|---|---|---|---|---|---|
| | | C | Si | Mn | P | S | | | |
| B1-1 | 2.0 | 0.02 | 2.5 | 0.01 | 0.015 | 0.006 | 280 | 219 | 12.4 |
| B1-2 | 2.6 | 0.02 | 2.5 | 0.01 | 0.015 | 0.006 | 280 | 219 | 13.5 |

(continued)

| Steel sample ID | Thickness (mm) | Chemical composition (mass%) | | | | | Average ferrite grain size in base metal portion (μm) | Average hardness of base metal portion | Erichsen value of base metal portion (mm) |
|---|---|---|---|---|---|---|---|---|---|
| | | C | Si | Mn | P | S | | | |
| B2-1 | 2.0 | 0.01 | 3.5 | 0.02 | 0.012 | 0.006 | 310 | 242 | 3.5 |
| B2-2 | 2.6 | 0.01 | 3.5 | 0.02 | 0.012 | 0.006 | 310 | 242 | 3.8 |

[Table 2]

Table 2

| | Joint type | Material to be joined | | | | | | Rotating tool | | | | | | Joining conditions | | | | | Expression (1) | Expression (2) | Expression (9) |
|---|---|---|---|---|---|---|---|---|---|---|---|---|---|---|---|---|---|---|---|---|---|
| | | First electrical steel strip | | Second electrical steel strip | | t (mm) | TJ (mm) | Shape | Shoulder diameter D (mm) | dv or dc (mm) | dv/D or dc/D (mm) | Stepped portion form | Tilt angle α (°) | Shoulder gap G (mm) | Rotation speed RS (r/min) | | Joining speed JS (mm/min) | RS×D³/JS | | | |
| | | Steel sample ID | Thickness t1 (mm) | Steel sample ID | Thickness t2 (mm) | | | | | | | | | | Front side | Back side | | | | | |
| Example 1 | Butt | B1-2 | 2.6 | B1-2 | 2.6 | 2.6 | 2.6 | FIG. 8 Concave-end | 21 | 0.3 | 0.014 | Grooved | 0 | 1.80 | 800 | 800 | 2000 | 3704 | Satisfied | Satisfied | Satisfied |
| Example 2 | Butt | B2-2 | 2.6 | B2-2 | 2.6 | 2.6 | 2.6 | FIG. 5 Concave-end | 13 | 0.3 | 0.023 | - | 0 | 1.80 | 800 | 800 | 1000 | 1758 | Satisfied | Satisfied | Satisfied |
| Example 3 | Butt | B2-2 | 2.6 | B2-2 | 2.6 | 2.6 | 2.6 | FIG. 5 Concave-end | 21 | 0.3 | 0.014 | - | 0 | 2.20 | 1500 | 1500 | 3000 | 4631 | Satisfied | Satisfied | Satisfied |
| Example 4 | Butt | B1-2 | 2.6 | B2-2 | 2.6 | 2.6 | 2.6 | FIG. 6 Flat-end | 21 | - | - | Grooved | 0 | 1.80 | 1200 | 1200 | 3000 | 3704 | Satisfied | Satisfied | Satisfied |
| Example 5 | Butt | B2-2 | 2.6 | B2-2 | 2.6 | 2.6 | 2.6 | FIG. 3 Flat-end | 21 | - | - | - | 0 | 1.80 | 800 | 800 | 2000 | 3704 | Satisfied | Satisfied | Satisfied |
| Example 6 | Butt | B1-2 | 2.6 | B1-2 | 2.6 | 2.6 | 2.6 | FIG. 7 Convex-end | 21 | 0.5 | 0.024 | Step-like | 0 | 2.20 | 1500 | 1500 | 3000 | 4631 | Satisfied | Satisfied | Satisfied |
| Example 7 | Butt | B2-1 | 2.0 | B1-1 | 2.0 | 2.0 | 2.0 | FIG. 4 Convex-end | 13 | 0.5 | 0.038 | - | 0 | 1.20 | 3000 | 3000 | 3000 | 2197 | Satisfied | Satisfied | Satisfied |
| Example 8 | Butt | B1-1 | 2.0 | B2-1 | 2.0 | 2.0 | 2.0 | FIG. 4 Convex-end | 13 | 0.3 | 0.023 | - | 0 | 1.40 | 1500 | 1500 | 3000 | 1099 | Satisfied | Satisfied | Satisfied |
| Example 9 | Butt | B2-2 | 2.6 | B1-2 | 2.6 | 2.6 | 2.6 | FIG. 4 Convex-end | 21 | 0.5 | 0.024 | - | 0 | 1.80 | 1200 | 1200 | 3000 | 3704 | Satisfied | Satisfied | Satisfied |
| Example 10 | Butt | B1-1 | 2.0 | B1-1 | 2.0 | 2.0 | 2.0 | FIG. 7 Convex-end | 13 | 0.3 | 0.023 | Step-like | 0 | 1.40 | 3000 | 3000 | 4000 | 1648 | Satisfied | Satisfied | Satisfied |
| Example 11 | Butt | B1-1 | 2.0 | B1-2 | 2.6 | 2.6 | 2.3 | FIG. 7 Convex-end | 21 | 0.5 | 0.024 | Step-like | 0 | **2.20** | 1000 | 1000 | 3000 | 3087 | Satisfied | Satisfied | Unsatisfied |
| Example 12 | Lap | B1-1 | 2.0 | B1-1 | 2.0 | 2.0 | 4.0 | FIG. 7 Convex-end | 21 | 0.5 | 0.024 | Step-like | 0 | 2.20 | 1500 | 1500 | 2000 | 6946 | Satisfied | Satisfied | Satisfied |
| Comparative Example 1 | Butt | B1-2 | 2.6 | B1-2 | 2.6 | 2.6 | 2.6 | FIG. 8 Concave-end | 21 | 0.3 | 0.014 | Grooved | 0 | 1.80 | 800 | 800 | 2000 | 3704 | Satisfied | Satisfied | Satisfied |
| Comparative Example 2 | Butt | B2-2 | 2.6 | B2-2 | 2.6 | 2.6 | 2.6 | FIG. 5 Concave-end | 13 | 0.3 | 0.023 | - | 0 | 1.80 | 800 | 800 | 1000 | 1758 | Satisfied | Satisfied | Satisfied |
| Comparative Example 3 | Butt | B2-2 | 2.6 | B2-2 | 2.6 | 2.6 | 2.6 | FIG. 5 Concave-end | 21 | 0.3 | 0.014 | - | 0 | 2.20 | 1500 | 1500 | 3000 | 4631 | Satisfied | Satisfied | Satisfied |
| Comparative Example 4 | Butt | B1-2 | 2.6 | B2-2 | 2.6 | 2.6 | 2.6 | FIG. 6 Flat-end | 21 | - | - | Grooved | 0 | 1.80 | 1200 | 1200 | 3000 | 3704 | Satisfied | Satisfied | Satisfied |
| Comparative Example 5 | Butt | B2-2 | 2.6 | B2-2 | 2.6 | 2.6 | 2.6 | FIG. 3 Flat-end | 21 | - | - | - | 0 | 1.80 | 800 | 800 | 2000 | 3704 | Satisfied | Satisfied | Satisfied |
| Comparative Example 6 | Butt | B1-2 | 2.6 | B1-2 | 2.6 | 2.6 | 2.6 | FIG. 7 Convex-end | 21 | 0.5 | 0.024 | Step-like | 0 | 2.20 | 1500 | 1500 | 3000 | 4631 | Satisfied | Satisfied | Satisfied |
| Comparative Example 7 | Butt | B2-1 | 2.0 | B1-1 | 2.0 | 2.0 | 2.0 | FIG. 4 Convex-end | 13 | 0.5 | 0.038 | - | 0 | 1.20 | 3000 | 3000 | 3000 | 2197 | Satisfied | Satisfied | Satisfied |
| Comparative Example 8 | Butt | B1-1 | 2.0 | B2-1 | 2.0 | 2.0 | 2.0 | FIG. 4 Convex-end | 13 | 0.3 | 0.023 | - | 0 | 1.40 | 1500 | 1500 | 3000 | 1099 | Satisfied | Satisfied | Satisfied |
| Comparative Example 9 | Butt | B2-2 | 2.6 | B1-2 | 2.6 | 2.6 | 2.6 | FIG. 4 Convex-end | 21 | 0.5 | 0.024 | - | 0 | 1.80 | 1200 | 1200 | 3000 | 3704 | Satisfied | Satisfied | Satisfied |
| Comparative Example 10 | Butt | B2-2 | 2.6 | B1-2 | 2.6 | 2.6 | 2.6 | FIG. 2B With probe | **27** | - | - | - | 1.50 | 1.50 | 400 | 400 | 1200 | **6561** | Unsatisfied | Unsatisfied | Satisfied |
| Comparative Example 11 | Butt | B1-1 | 2.0 | B1-1 | 2.0 | 2.0 | 2.3 | FIG. 7 Convex-end | 21 | 0.5 | 0.024 | Step-like | 0 | **2.20** | 1000 | 1000 | 3000 | 3087 | Satisfied | Satisfied | Unsatisfied |
| Comparative Example 12 | Lap | B1-1 | 2.0 | B1-1 | 2.0 | 2.0 | 4.0 | FIG. 7 Convex-end | 21 | 0.5 | 0.024 | Step-like | 0 | 2.20 | 1500 | 1500 | 2000 | 6946 | Satisfied | Satisfied | Satisfied |

Satisfied: satisfies the relationship of the Expression

Unsatisfied does not satisfy the relationship of the Expression

Table 2 (cont'd)

| | Joint type | Cooling process | | | | | | | | | | | | (10) Expression | (11) Expression | (12) Expression | (16) Expression | (17) Expression |
| | | Front side | | | | | Back side | | | | | | | | | | | |
| | | Cooling device | $CR_{W=0}$ (°C/s) | $CR_{W=0.2D}$ (°C/s) | $CR_{W=0.5D}$ (°C/s) | $CR_{W=0.2D}/CR_{W=0}$ | $CR_{W=0.5D}/CR_{W=0}$ | Cooling device | $CR_{W=0}$ (°C/s) | $CR_{W=0.2D}$ (°C/s) | $CR_{W=0.5D}$ (°C/s) | $CR_{W=0.2D}/CR_{W=0}$ | $CR_{W=0.5D}/CR_{W=0}$ | | | | | |
| Example 1 | Butt | Yes | 30.9 | 30.9 | 30.8 | 1.00 | 1.00 | Yes | 31.0 | 30.9 | 30.8 | 1.00 | 0.99 | Satisfied | Satisfied | Satisfied | Satisfied | Satisfied |
| Example 2 | Butt | Yes | 42.7 | 42.6 | 42.4 | 1.00 | 0.99 | Yes | 42.8 | 42.6 | 42.5 | 1.00 | 0.99 | Satisfied | Satisfied | Satisfied | Satisfied | Satisfied |
| Example 3 | Butt | Yes | 25.8 | 25.7 | 25.7 | 1.00 | 1.00 | Yes | 25.7 | 25.6 | 25.6 | 1.00 | 1.00 | Satisfied | Satisfied | Satisfied | Satisfied | Satisfied |
| Example 4 | Butt | Yes | 26.3 | 26.2 | 26.1 | 1.00 | 0.99 | Yes | 26.3 | 26.2 | 26.0 | 1.00 | 0.99 | Satisfied | Satisfied | Satisfied | Satisfied | Satisfied |
| Example 5 | Butt | Yes | 31.1 | 31.0 | 30.9 | 1.00 | 0.99 | Yes | 31.1 | 31.0 | 30.9 | 1.00 | 0.99 | Satisfied | Satisfied | Satisfied | Satisfied | Satisfied |
| Example 6 | Butt | Yes | 22.7 | 22.6 | 22.6 | 1.00 | 1.00 | No | 16.6 | 16.5 | 16.5 | 0.99 | 0.99 | Satisfied | Satisfied | Satisfied | Satisfied | Satisfied |
| Example 7 | Butt | Yes | 24.0 | 23.9 | 23.8 | 1.00 | 0.99 | No | 17.9 | 17.9 | 17.8 | 1.00 | 0.99 | Satisfied | Satisfied | Satisfied | Satisfied | Satisfied |
| Example 8 | Butt | Yes | 25.3 | 25.1 | 35.0 | 0.99 | 1.38 | No | 19.0 | 19.1 | 19.0 | 1.01 | 1.00 | Satisfied | Satisfied | Satisfied | Satisfied | Satisfied |
| Example 9 | Butt | Yes | 23.2 | 23.0 | 23.0 | 0.99 | 0.99 | No | 17.2 | 17.1 | 17.0 | 0.99 | 0.99 | Satisfied | Satisfied | Satisfied | Satisfied | Satisfied |
| Example 10 | Butt | Yes | 28.3 | 26.7 | 26.5 | 0.94 | 0.94 | No | 21.1 | 16.7 | 16.2 | **0.79** | **0.77** | Satisfied | Satisfied | Satisfied | Unsatisfied | Unsatisfied |
| Example 11 | Butt | Yes | 25.1 | 24.9 | 24.8 | 0.99 | 0.99 | Yes | 25.1 | 24.8 | 24.6 | 0.99 | 0.98 | Satisfied | Satisfied | Satisfied | Satisfied | Satisfied |
| Example 12 | Lap | Yes | 30.3 | 29.8 | 29.7 | 0.98 | 0.98 | Yes | 30.1 | 29.8 | 29.8 | 0.99 | 0.99 | Satisfied | Satisfied | Satisfied | Satisfied | Satisfied |
| Comparative Example 1 | Butt | No | **8.7** | **8.6** | **8.4** | 0.99 | 0.97 | No | **8.8** | **8.6** | **8.4** | 0.98 | 0.95 | Unsatisfied | Unsatisfied | Unsatisfied | Satisfied | Satisfied |
| Comparative Example 2 | Butt | No | **10.6** | **10.3** | **10.1** | 0.97 | 0.95 | No | **10.7** | **10.4** | **10.2** | 0.97 | 0.95 | Unsatisfied | Unsatisfied | Unsatisfied | Satisfied | Satisfied |
| Comparative Example 3 | Butt | No | **8.0** | **7.9** | **7.9** | 0.99 | 0.99 | No | **7.8** | **7.7** | **7.7** | 0.99 | 0.99 | Unsatisfied | Unsatisfied | Unsatisfied | Satisfied | Satisfied |
| Comparative Example 4 | Butt | No | **8.8** | **8.6** | **8.5** | 0.98 | 0.97 | No | **8.8** | **8.7** | **8.4** | 0.99 | 0.95 | Unsatisfied | Unsatisfied | Unsatisfied | Satisfied | Satisfied |
| Comparative Example 5 | Butt | No | **8.9** | **8.8** | **8.6** | 0.99 | 0.97 | No | **9.0** | **8.8** | **8.6** | 0.98 | 0.96 | Unsatisfied | Unsatisfied | Unsatisfied | Satisfied | Satisfied |
| Comparative Example 6 | Butt | No | **7.8** | **7.7** | **7.7** | 0.99 | 0.99 | No | **7.6** | **7.5** | **7.5** | 0.99 | 0.99 | Unsatisfied | Unsatisfied | Unsatisfied | Satisfied | Satisfied |
| Comparative Example 7 | Butt | No | **10.0** | **9.8** | **9.7** | 0.98 | 0.97 | No | **9.9** | **9.9** | **9.7** | 1.00 | 0.98 | Unsatisfied | Unsatisfied | Unsatisfied | Satisfied | Satisfied |
| Comparative Example 8 | Butt | No | **12.1** | **11.8** | **11.6** | 0.98 | 0.96 | No | **11.7** | **11.9** | **11.7** | 1.02 | 1.00 | Unsatisfied | Unsatisfied | Unsatisfied | Satisfied | Satisfied |
| Comparative Example 9 | Butt | No | **8.6** | **8.4** | **8.4** | 0.98 | 0.98 | No | **8.6** | **8.5** | **8.3** | 0.99 | 0.97 | Unsatisfied | Unsatisfied | Unsatisfied | Satisfied | Satisfied |
| Comparative Example 10 | Butt | Yes | 40.7 | 40.6 | 40.5 | 1.00 | 1.00 | Yes | 40.7 | 40.6 | 40.5 | 1.00 | 1.00 | Satisfied | Satisfied | Satisfied | Satisfied | Satisfied |
| Comparative Example 11 | Butt | No | **7.8** | **7.6** | **7.4** | 0.97 | 0.95 | No | **7.7** | **7.5** | **7.3** | 0.97 | 0.95 | Unsatisfied | Unsatisfied | Unsatisfied | Satisfied | Satisfied |
| Comparative Example 12 | Lap | No | **5.0** | **4.9** | **4.8** | 0.98 | 0.96 | No | **4.8** | **4.6** | **4.6** | 0.96 | 0.96 | Unsatisfied | Unsatisfied | Unsatisfied | Satisfied | Satisfied |

Satisfied: satisfies the relationship of the Expression

Unsatisfied: does not satisfy the relationship of the Expression

[Table 3]

Table 3

| | Joint type | Joining method | Material to be joined | | | | | | | | | | | Joined portion | | | | | Thermo-mechanically affected zone | | | |
|---|---|---|---|---|---|---|---|---|---|---|---|---|---|---|---|---|---|---|---|---|---|---|---|
| | | | First electrical steel strip | | | | Second electrical steel strip | | | | TbmL (mm) | TbmH (mm) | Ferrite phase area fraction (%) | Dsz (µm) | Hsz | TszL (mm) | TszH (mm) | First electrical steel strip side | | Second electrical steel strip side | |
| | | | Steel sample ID | Dbm1 (µm) | Hbm1 | Thickness (mm) | Steel sample ID | Dbm2 (µm) | Hbm2 | Thickness (mm) | | | | | | | | Ferrite phase area fraction (%) | Dhaz1 (µm) | Ferrite phase area fraction (%) | Dhaz2 (µm) |
| Example 1 | Butt | Double-sided | B1-2 | 280 | 219 | 2.6 | B1-2 | 280 | 219 | 2.6 | 2.6 | 2.6 | 99 | 25 | 242 | 2.4 | 2.8 | 99 | 212 | 99 | 209 |
| Example 2 | Butt | Double-sided | B2-2 | 310 | 242 | 2.6 | B2-2 | 310 | 242 | 2.6 | 2.6 | 2.6 | 99 | 23 | 262 | 2.4 | 2.7 | 99 | 217 | 99 | 219 |
| Example 3 | Butt | Double-sided | B2-2 | 310 | 242 | 2.6 | B2-2 | 310 | 242 | 2.6 | 2.6 | 2.6 | 99 | 46 | 260 | 2.6 | 2.6 | 99 | 250 | 99 | 251 |
| Example 4 | Butt | Double-sided | B1-2 | 280 | 219 | 2.6 | B2-2 | 310 | 242 | 2.6 | 2.6 | 2.6 | 99 | 33 | 241 | 2.5 | 2.7 | 99 | 210 | 99 | 230 |
| Example 5 | Butt | Double-sided | B2-2 | 310 | 242 | 2.6 | B2-2 | 310 | 242 | 2.6 | 2.6 | 2.6 | 99 | 29 | 261 | 2.4 | 2.6 | 99 | 193 | 99 | 196 |
| Example 6 | Butt | Double-sided | B1-2 | 280 | 219 | 2.6 | B1-2 | 280 | 219 | 2.6 | 2.6 | 2.6 | 99 | 53 | 239 | 2.6 | 2.7 | 99 | 227 | 99 | 225 |
| Example 7 | Butt | Double-sided | B2-1 | 310 | 242 | 2.0 | B1-1 | 280 | 219 | 2.0 | 2.0 | 2.0 | 99 | 44 | 240 | 1.8 | 2.0 | 99 | 208 | 99 | 185 |
| Example 8 | Butt | Double-sided | B1-1 | 280 | 219 | 2.0 | B2-1 | 310 | 242 | 2.0 | 2.0 | 2.0 | 99 | 78 | 237 | 1.8 | 2.1 | 99 | 224 | 99 | 250 |
| Example 9 | Butt | Double-sided | B2-2 | 310 | 242 | 2.6 | B1-2 | 280 | 219 | 2.6 | 2.6 | 2.6 | 99 | 42 | 240 | 2.4 | 2.6 | 99 | 231 | 99 | 209 |
| Example 10 | Butt | Double-sided | B1-1 | 280 | 219 | 2.0 | B1-1 | 280 | 219 | 2.0 | 2.0 | 2.0 | 99 | 33 | 246 | 1.8 | 2.0 | 99 | 227 | 99 | 226 |
| Example 11 | Butt | Double-sided | B1-1 | 280 | 219 | 2.0 | B1-2 | 280 | 219 | 2.6 | 2.0 | 2.6 | 99 | 36 | 245 | 2.3 | 2.6 | 99 | 230 | 99 | 231 |
| Example 12 | Lap | Double-sided | B1-1 | 280 | 219 | 2.0 | B1-1 | 280 | 219 | 2.0 | 2.0 | 2.0 | 99 | 31 | 246 | 3.4 | **3.8** | 99 | 229 | 99 | 228 |
| Comparative Example 1 | Butt | Double-sided | B1-2 | 280 | 219 | 2.6 | B1-2 | 280 | 219 | 2.6 | 2.6 | 2.6 | 99 | **105** | 230 | 2.3 | 2.8 | 99 | 217 | 99 | 214 |
| Comparative Example 2 | Butt | Double-sided | B2-2 | 310 | 242 | 2.6 | B2-2 | 310 | 242 | 2.6 | 2.6 | 2.6 | 99 | **103** | 257 | 2.4 | 2.7 | 99 | 221 | 99 | 225 |
| Comparative Example 3 | Butt | Double-sided | B2-2 | 310 | 242 | 2.6 | B2-2 | 310 | 242 | 2.6 | 2.6 | 2.6 | 99 | **167** | 249 | 2.6 | 2.6 | 99 | 255 | 99 | 257 |
| Comparative Example 4 | Butt | Double-sided | B1-2 | 280 | 219 | 2.6 | B2-2 | 310 | 242 | 2.6 | 2.6 | 2.6 | 99 | **110** | 242 | 2.4 | 2.8 | 99 | 215 | 99 | 235 |
| Comparative Example 5 | Butt | Double-sided | B2-2 | 310 | 242 | 2.6 | B2-2 | 310 | 242 | 2.6 | 2.6 | 2.6 | 99 | **113** | 255 | 2.4 | 2.8 | 99 | 199 | 99 | 203 |
| Comparative Example 6 | Butt | Double-sided | B1-2 | 280 | 219 | 2.6 | B1-2 | 280 | 219 | 2.6 | 2.6 | 2.6 | 99 | **151** | 225 | 2.6 | 2.7 | 99 | 233 | 99 | 231 |
| Comparative Example 7 | Butt | Double-sided | B2-1 | 310 | 242 | 2.0 | B1-1 | 280 | 219 | 2.0 | 2.0 | 2.0 | 99 | **102** | 243 | 1.7 | 2.0 | 99 | 215 | 99 | 190 |
| Comparative Example 8 | Butt | Double-sided | B1-1 | 280 | 219 | 2.0 | B2-1 | 310 | 242 | 2.0 | 2.0 | 2.0 | 99 | **159** | 237 | 1.8 | 2.1 | 99 | 230 | 99 | 256 |
| Comparative Example 9 | Butt | Double-sided | B2-2 | 310 | 242 | 2.6 | B1-2 | 280 | 219 | 2.6 | 2.6 | 2.6 | 99 | **109** | 242 | 2.4 | 2.7 | 99 | 237 | 99 | 214 |
| Comparative Example 10 | Butt | Double-sided | B2-2 | 310 | 242 | 2.6 | B2-2 | 310 | 242 | 2.6 | 2.6 | 2.6 | 99 | **104** | 244 | 2.4 | 2.8 | 99 | 250 | 99 | 255 |
| Comparative Example 11 | Butt | Double-sided | B1-1 | 280 | 219 | 2.0 | B1-2 | 280 | 219 | 2.6 | 2.0 | 2.6 | 99 | **125** | 235 | 2.3 | 2.6 | 99 | 241 | 99 | 244 |
| Comparative Example 12 | Lap | Double-sided | B1-1 | 280 | 219 | 2.0 | B1-1 | 280 | 219 | 2.0 | 2.0 | 2.0 | 99 | **190** | 236 | 3.4 | **4.0** | 99 | 236 | 99 | 243 |

[Table 4]

Table 4

| | Expression (3) | Expression (4) | Expression (5) | Expression (6) | Expression (7) | Expression (8) | Surface defect | Internal defect | Erichsen value of welded joint (mm) | Erichsen value ratio (%) | Evaluation | 90 % maintained maximum joint number | Evaluation |
|---|---|---|---|---|---|---|---|---|---|---|---|---|---|
| Example 1 | Satisfied | Satisfied | Satisfied | Satisfied | Satisfied | Satisfied | No | No | 13.2 | 98 | Pass | 18 | Pass |
| Example 2 | Satisfied | Satisfied | Satisfied | Satisfied | Satisfied | Satisfied | No | No | 3.8 | 100 | Pass | 26 | Pass |
| Example 3 | Satisfied | Satisfied | Satisfied | Satisfied | Satisfied | Satisfied | No | No | 3.7 | 97 | Pass | 19 | Pass |
| Example 4 | Satisfied | Satisfied | Satisfied | Satisfied | Satisfied | Satisfied | No | No | 3.6 | 95 | Pass | 17 | Pass |
| Example 5 | Satisfied | Satisfied | Satisfied | Satisfied | Satisfied | Satisfied | No | No | 3.7 | 97 | Pass | 23 | Pass |
| Example 6 | Satisfied | Satisfied | Satisfied | Satisfied | Satisfied | Satisfied | No | No | 13.0 | 96 | Pass | 19 | Pass |
| Example 7 | Satisfied | Satisfied | Satisfied | Satisfied | Satisfied | Satisfied | No | No | 3.3 | 94 | Pass | 24 | Pass |
| Example 8 | Satisfied | Satisfied | Satisfied | Satisfied | Satisfied | Satisfied | No | No | 3.5 | 100 | Pass | 20 | Pass |
| Example 9 | Satisfied | Satisfied | Satisfied | Satisfied | Satisfied | Satisfied | No | No | 3.7 | 97 | Pass | 21 | Pass |
| Example 10 | Satisfied | Satisfied | Satisfied | Satisfied | Satisfied | Satisfied | No | No | 11.6 | 94 | Pass | 20 | Pass |
| Example 11 | Satisfied | Satisfied | Satisfied | Satisfied | Satisfied | Satisfied | No | No | 11.3 | 91 | Pass | 22 | Pass |
| Example 12 | Satisfied | Satisfied | Satisfied | Satisfied | Satisfied | Unsatisfied | No | No | 11.2 | 90 | Pass | 15 | Pass |
| Comparative Example 1 | Unsatisfied | Satisfied | Satisfied | Satisfied | Satisfied | Satisfied | No | No | 12.1 | **89** | Fail | 16 | Pass |
| Comparative Example 2 | Unsatisfied | Satisfied | Satisfied | Satisfied | Satisfied | Satisfied | No | No | 3.2 | **84** | Fail | 25 | Pass |
| Comparative Example 3 | Unsatisfied | Satisfied | Satisfied | Satisfied | Satisfied | Satisfied | No | No | 3.1 | **82** | Fail | 18 | Pass |
| Comparative Example 4 | Unsatisfied | Satisfied | Satisfied | Satisfied | Satisfied | Satisfied | No | No | 3.1 | **82** | Fail | 15 | Pass |
| Comparative Example 5 | Unsatisfied | Satisfied | Satisfied | Satisfied | Satisfied | Satisfied | No | No | 3.1 | **82** | Fail | 23 | Pass |
| Comparative Example 6 | Unsatisfied | Satisfied | Satisfied | Satisfied | Satisfied | Satisfied | No | No | 11.5 | **85** | Fail | 17 | Pass |
| Comparative Example 7 | Unsatisfied | Satisfied | Satisfied | Satisfied | Satisfied | Satisfied | No | No | 3.2 | **88** | Fail | 22 | Pass |
| Comparative Example 8 | Unsatisfied | Satisfied | Satisfied | Satisfied | Satisfied | Satisfied | No | No | 2.9 | **83** | Fail | 18 | Pass |
| Comparative Example 9 | Unsatisfied | Satisfied | Satisfied | Satisfied | Satisfied | Satisfied | No | No | 3.1 | **82** | Fail | 20 | Pass |
| Comparative Example 10 | Unsatisfied | Satisfied | Satisfied | Satisfied | Satisfied | Satisfied | No | No | 3.1 | **82** | Fail | 10 | Fail |
| Comparative Example 11 | Unsatisfied | Satisfied | Satisfied | Satisfied | Satisfied | Satisfied | No | No | 9.5 | **77** | Fail | 21 | Pass |
| Comparative Example 12 | Unsatisfied | Satisfied | Satisfied | Satisfied | Satisfied | Unsatisfied | No | No | 8.1 | **65** | Fail | 14 | Fail |

Satisfied: satisfies the relationship of the Expression

Unsatisfied: does not satisfy the relationship of the Expression

Table 4 indicates that for all of the Examples, electrical steel strip welded joints were obtained that had an excellent fracture inhibition effect, with no defects and an Erichsen value ratio of 90 % or more, while joining with high work efficiency at a joining speed of 1000 mm/min or more. Further, all the Examples were also excellent in terms of durability (life span) of the rotating tools.

In contrast, for the Comparative Examples, sufficient fracture inhibition effect was not obtained when joining at a joining speed of 1000 mm/min or more.

REFERENCE SIGNS LIST

1 first electrical steel strip (material to be joined)
2 second electrical steel strip (material to be joined)
3-1 rotating tool (front side rotating tool)
3-2 rotating tool (back side rotating tool)
4 joined portion
4-1 thermo-mechanically affected zone (first electrical steel strip side)
4-2 thermo-mechanically affected zone (second electrical steel strip side)
5-1, 5-2 shoulders
6-1, 6-2 probes
7 gripping device
9-1, 9-2 lead ends
10-1 cooling device (front side cooling device)
10-2 cooling device (back side cooling device)
11 driving device for rotating tools
12 operation control device

**Claims**

1. An electrical steel strip friction stir welding method for joining a first electrical steel strip and a second electrical steel strip as material to be joined by a pair of rotating tools facing each other, the electrical steel strip friction stir welding method comprising:

   a joining process of pressing the rotating tools into an unjoined portion of the material to be joined from both sides while rotating the rotating tools in opposite directions, and moving the rotating tools in a joining direction, to join the first electrical steel strip and the second electrical steel strip to form a joined portion; and
   a cooling process of cooling the joined portion by a cooling device disposed behind the rotating tools in the joining direction on at least one side of the material to be joined, wherein
   the unjoined portion of the material to be joined is a butted portion or an overlapped portion of an end of the first electrical steel strip and an end of the second electrical steel strip following the first electrical steel strip,
   the joining process and the cooling process are carried out continuously by moving the rotating tools in the joining direction in conjunction with the cooling device,
   the diameter D in mm of shoulders of the rotating tools satisfies the relationship of the following Expression (1), and
   a rotation speed RS in r/min of the rotating tools, the diameter D in mm of the shoulders of the rotating tools, and a joining speed JS in mm/min, expressed as $RS \times D^3/JS$, satisfy the relationship of the following Expression (2),

$$4 \times TJ \leq D \leq 10 \times TJ \qquad \ldots(1)$$

$$200 \times TJ \leq RS \times D^3/JS \leq 2000 \times TJ \qquad \ldots(2)$$

   where TJ is defined such that,
   when the unjoined portion is the butted portion, TJ is an average value in mm of the thickness of the first electrical steel strip and the thickness of the second electrical steel strip, and
   when the unjoined portion is the overlapped portion, TJ is the thickness in mm of the overlapped portion.

2. The electrical steel strip friction stir welding method according to claim 1, wherein, in the joining process, the joining is carried out under conditions that steel microstructures of the joined portion and a thermo-mechanically affected zone formed by the joining of the first electrical steel strip and the second electrical steel strip become mainly ferrite phase and the relationships of the following Expressions (3) to (6) are satisfied,

$$\text{Dsz} \leq 100 \ \mu\text{m} \qquad \ldots(3)$$

$$\text{Dhaz1} \leq \text{Dbm1} \qquad \ldots(4)$$

$$\text{Dhaz2} \leq \text{Dbm2} \qquad \ldots(5)$$

$$0.9 \times (\text{Hbm1} + \text{Hbm2})/2 \leq \text{Hsz} \leq 1.2 \times (\text{Hbm1} + \text{Hbm2})/2 \qquad \ldots(6)$$

where

Dsz is an average value in $\mu$m of ferrite grain size of the joined portion,
Dhaz1 is an average value in $\mu$m of ferrite grain size of the thermo-mechanically affected zone on a first electrical steel strip side,
Dhaz2 is an average value in $\mu$m of ferrite grain size of the thermo-mechanically affected zone on a second electrical steel strip side,
Dbm1 is an average value in $\mu$m of ferrite grain size of the base metal portion of the first electrical steel strip,
Dbm2 is an average value in $\mu$m of ferrite grain size of the base metal portion of the second electrical steel strip,
Hsz is an average value of hardness of the joined portion,
Hbm1 is an average value of hardness of the base metal portion of the first electrical steel strip, and
Hbm2 is an average value of hardness of the base metal portion of the second electrical steel strip.

3. The electrical steel strip friction stir welding method according to claim 2, wherein, in the joining process, the joining is carried out under conditions satisfying the relationships of the following Expressions (7) and (8),

$$0.8 \times \text{TbmL} \leq \text{TszL} \qquad \ldots(7)$$

$$\text{TszH} \leq 1.3 \times \text{TbmH} \qquad \ldots(8)$$

where

TszL is the minimum value in mm of the thickness of the joined portion,
TszH is the maximum value in mm of the thickness of the joined portion,
TbmL is the thickness in mm of the thinner of the first electrical steel strip and the second electrical steel strip,
TbmH is the thickness in mm of the thicker of the first electrical steel strip and the second electrical steel strip, and
when the thicknesses of the first electrical steel strip and the second electrical steel strip are the same, TbmL = TbmH.

4. The electrical steel strip friction stir welding method according to any one of claims 1 to 3, wherein, in the joining process, a gap G in mm between the shoulders of the rotating tools satisfies the relationship of the following Expression (9),

$$0.4 \times \text{TJ} \leq \text{G} \leq 0.9 \times \text{TJ} \qquad \ldots(9).$$

5. The electrical steel strip friction stir welding method according to any one of claims 1 to 3, wherein the rotating tools are rotating tools without probes.

6. The electrical steel strip friction stir welding method according to claim 5, wherein the lead ends of the rotating tools are each a flat, convex curved, or concave curved surface.

7.  The electrical steel strip friction stir welding method according to claim 6, wherein the lead ends of the rotating tools each have a spiral-shaped stepped portion spiraling in the opposite direction to rotation.

8.  The electrical steel strip friction stir welding method according to claim 7, wherein each of the spiral-shaped stepped portions becomes gradually lower from the center to the periphery of the lead end of the rotating tool.

9.  The electrical steel strip friction stir welding method according to claim 7, wherein each of the spiral-shaped stepped portions becomes gradually higher from the center to the periphery of the lead end of the rotating tool.

10. The electrical steel strip friction stir welding method according to claim 5, wherein a tilt angle $\alpha$ of the rotating tools is 0°.

11. The electrical steel strip friction stir welding method according to any one of claims 1 to 3, wherein, in the cooling process, the cooling is carried out under conditions satisfying the relationships of the following Expressions (10) to (12),

$$CR_{W=0} \geq 15 \qquad \ldots(10)$$

$$CR_{W=0.2D} \geq 15 \qquad \ldots(11)$$

$$CR_{W=0.5D} \geq 15 \qquad \ldots(12)$$

where $CR_{W=0}$, $CR_{W=0.2D}$, and $CR_{W=0.5D}$ are cooling rates in °C/s from a joining end temperature to 450 °C at a surface of the joined portion at W = 0, 0.2 × D, and 0.5 × D, respectively, W is the distance in mm separated from a joining center line of the material to be joined in a perpendicular-to-joining direction, and D is the diameter in mm of shoulders of the rotating tools.

12. The electrical steel strip friction stir welding method according to claim 11, wherein the cooling device is an inert gas ejection device, a liquid ejection device, or a combination of these devices.

13. A method of producing an electrical steel strip, the method comprising:

    joining a first electrical steel strip and a second electrical steel strip by the electrical steel strip friction stir welding method according to claim 11, to obtain a joined steel strip; and
    cold rolling the joined steel strip to obtain a cold-rolled steel strip.

14. A friction stir welding device used in the electrical steel strip friction stir welding method according to claim 11, the friction stir welding device comprising:

    a gripping device configured to grip material to be joined;
    a pair of rotating tools facing each other;
    a driving device for the rotating tools;
    a cooling device disposed behind the rotating tools in the joining direction on at least one side of the material to be joined; and
    an operation control device configured to control operation of the gripping device, the driving device for the rotating tools, and the cooling device.

15. The friction stir welding device according to claim 14, further comprising a cooling rate measuring device configured to measure $CR_{W=0}$, $CR_{W=0.2D}$, and $CR_{W=0.5D}$ on both sides of the joined portion formed from the material to be joined, where $CR_{W=0}$, $CR_{W=0.2D}$, and $CR_{W=0.5D}$ are cooling rates in °C/s from a joining end temperature to 450 °C at a surface of the joined portion at W = 0, 0.2 × D, and 0.5 × D, respectively, W is the distance in mm separated from a joining center line of the material to be joined in a perpendicular-to-joining direction, and D is the diameter in mm of shoulders of the rotating tools.

16. The friction stir welding device according to claim 15, wherein the cooling device is an inert gas ejection device, a liquid ejection device, or a combination of these devices.

**17.** An electrical steel strip production device comprising the friction stir welding device according to claim 15.

## FIG. 1A

Tool rotation axis

Thickness direction
(direction perpendicular to
surface of material to be joined)

$\alpha$

10-1

A

Rotation direction of
front side rotating
tool

Joining direction

4

3-1

5-1

9-1

11  12

Joining
center line

6-1
5-2
6-2

9-2
3-2

A

10-2

Direction of
travel of
electrical
steel strips

1

2

Rotation direction
of back side
rotating tool

Thickness
direction

Perpendicular-
to-joining
direction

Tool rotation axis

$\alpha$

Joining
direction

EP 4 545 239 A1

# FIG. 1B

View from A-A

Direction of travel of
electrical steel strips

Thickness direction

Perpendicular-to-joining direction

EP 4 545 239 A1

# FIG. 1C

Rotation direction of front side rotating tool

Joining direction

Direction of travel of electrical steel strips

$W=0.5\times D$

$W=0.2\times D$

$W=0.5\times D$

Joining center line $W=0$

$W=0.2\times D$

Perpendicular-to-joining direction

Joining direction

EP 4 545 239 A1

FIG. 1D

EP 4 545 239 A1

Shoulder diameter D: 13 mm
Pin diameter: 4 mm
Pin length: 0.6 mm
Rotation direction

FIG. 2A

Shoulder diameter D: 27 mm
Pin diameter: 8 mm
Pin length: 0.9 mm
Rotation direction

FIG. 2B

## FIG. 3

Shoulder diameter D
(lead end diameter)

## FIG. 4

Shoulder diameter D
(lead end diameter)

Curved surface height dv

*FIG. 5*

Shoulder diameter D
(lead end diameter)

Curved surface depth dc

*FIG. 6*

Shoulder diameter D
(lead end diameter)

Rotation direction

## FIG. 7

Shoulder diameter D
(lead end diameter)

Curved surface height dv

Rotation direction

## FIG. 8

Shoulder diameter D
(lead end diameter)

Curved surface depth dc

Rotation direction

# FIG. 9

# FIG. 10

FIG. 11

FIG. 12

# FIG. 13

## FIG. 14

Rotation direction

## FIG. 15

Rotation direction

*FIG. 16*

Rotation direction

*FIG. 17*

Mid-thickness position

Joined portion measurement region

First electrical steel strip side thermo-mechanically affected zone measurement region

Second electrical steel strip side thermo-mechanically affected zone measurement region

Center position of joined portion

Y (thickness direction)

X (perpendicular-to-joining direction)

# FIG. 18

EP 4 545 239 A1

## INTERNATIONAL SEARCH REPORT

| International application No. |
| --- |
| **PCT/JP2023/015082** |

### A. CLASSIFICATION OF SUBJECT MATTER

**B23K 20/12**(2006.01)i; **B21B 15/00**(2006.01)i; **C22C 38/00**(2006.01)i; **C22C 38/60**(2006.01)i
FI: B23K20/12 344; B23K20/12 310; B23K20/12 340; B21B15/00 A; C22C38/00 303U; C22C38/60

According to International Patent Classification (IPC) or to both national classification and IPC

### B. FIELDS SEARCHED

Minimum documentation searched (classification system followed by classification symbols)

B23K20/12; B21B15/00; C22C38/00; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-124739 A (JFE STEEL CORP.) 20 August 2020 (2020-08-20)<br>entire text, all drawings | 1-17 |
| A | JP 4838385 B2 (MITSUBISHI-HITACHI METALS MACHINERY INC.) 14 December 2011 (2011-12-14)<br>entire text, all drawings | 1-17 |
| A | WO 2018/070317 A1 (JFE STEEL CORP.) 19 April 2018 (2018-04-19)<br>entire text, all drawings | 1-17 |
| A | WO 2021/060176 A1 (JFE STEEL CORP.) 01 April 2021 (2021-04-01)<br>entire text, all drawings | 1-17 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 June 2023** | **13 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/015082**

| Patent document cited in search report | | | Publication date (day/month/year) | Patent family member(s) | | | Publication date (day/month/year) |
|---|---|---|---|---|---|---|---|
| JP | 2020-124739 | A | 20 August 2020 | (Family: none) | | | |
| JP | 4838385 | B2 | 14 December 2011 | EP entire text, all drawings CN | 2474382 102481659 | A1 A | |
| WO | 2018/070317 | A1 | 19 April 2018 | KR 10-2019-0039985 CN | 109803784 | A A | |
| WO | 2021/060176 | A1 | 01 April 2021 | US entire text, all drawings EP KR 10-2022-0047652 CN | 2022/0371119 4035817 114423561 | A1 A1 A A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05305466 A
- JP 2004025284 A
- JP 2011140026 A
- JP H07505090 A
- WO 9310935 A1
- JP 3261433 B
- JP 4838385 B
- JP 4838388 B
- WO 201926864 A1
- WO 201954400 A1
- JP 6332561 B
- JP 6332562 B
- JP 6497451 B
- JP 2020124739 A

**Non-patent literature cited in the description**

- **CUI, L.** ; **FUJII, H.** ; **TSUJI, N.** ; **NOGI, K.** *Scripta Mater.*, 2007, vol. 56, 637-640